Europäisches Patentamt

European Patent Office

Office européen des brevets

(19)

(11)  **EP 0 942 342 B1**

(12)  **EUROPÄISCHE PATENTSCHRIFT**

(45) Veröffentlichungstag und Bekanntmachung des Hinweises auf die Patenterteilung:
**18.10.2006  Patentblatt 2006/42**

(51) Int Cl.:
*G05B 19/404* *(2006.01)*

(21) Anmeldenummer: **99103501.5**

(22) Anmeldetag: **24.02.1999**

(54)  **Verfahren und Vorrichtung zum Bearbeiten von Werkstücken**

Method and device for machining workpieces

Méthode et dispositif d'usinage de pièces

(84) Benannte Vertragsstaaten:
**CH DE FR IT LI**

(30) Priorität: **07.03.1998  DE 19809931**

(43) Veröffentlichungstag der Anmeldung:
**15.09.1999  Patentblatt 1999/37**

(73) Patentinhaber: **Traub Drehmaschinen GmbH & Co. KG**
**73262 Reichenbach (DE)**

(72) Erfinder:
• **Klauss, Walter**
**73099 Adelberg (DE)**

• **Osswald, Ernst**
**73262 Reichenbach (DE)**
• **Straubinger, Werner**
**89331 Burgau-Oberknöringen (DE)**
• **Kraft, Werner**
**73035 Göppingen-Faurndau (DE)**

(74) Vertreter: **Hoeger, Stellrecht & Partner**
**Patentanwälte**
**Uhlandstrasse 14 c**
**70182 Stuttgart (DE)**

(56) Entgegenhaltungen:
WO-A-97/43703            DE-A- 19 638 607
US-A- 5 619 414

**Beschreibung**

Die Erfindung betrifft ein Verfahren zum Bearbeiten von Werkstücken mittels einer eine werkstücktragende Baugruppe und eine werkzeugtragende Baugruppe umfassenden Werkzeugmaschine, wobei thermische Einflüssen auf die Reproduktionsgenauigkeit der Werkstücke in mindestens einer ausgewählten Bearbeitungsachse durch Berücksichtigung der Erwärmung reduziert werden.

Ein derartiges Verfahren ist beispielsweise aus der DE 196 38 607 bekannt.

Bei diesem bekannten Verfahren wird mittels Temperatursensoren die Temperatur einzelner Baugruppen erfaßt und daraus ein wärmeinduzierter Versatz errechnet.

Ein derartiges Verfahren hat den Nachteil, daß zu einer möglichst präzisen Erfassung der thermischen Einflüsse, insbesondere bei komplexen Maschinen, eine Vielzahl von Sensoren erforderlich ist, die einerseits erhebliche Kosten verursachen und andererseits die Komplexität und Störanfälligkeit der Werkzeugmaschine steigern.

Der Erfindung liegt daher die Aufgabe zugrunde, ein Verfahren der gattungsgemäßen Art derart zu verbessern, daß die Berücksichtigung thermischer Einflüsse möglichst einfach und möglichst kostengünstig erfolgen kann.

Diese Aufgabe wird bei einem Verfahren der eingangs beschriebenen Art erfindungsgemäß dadurch gelöst, daß mindestens einem Maschinenelement der Werkzeugmaschine mindestens eine Wärmequelle zugeordnet wird, daß ein eine von der Wärmequelle entsprechend dem Betrieb der Werkzeugmaschine abgegebene Wärmeleistung repräsentierender Wärmeleistungswert erfaßt und darauf basierend ein die thermische Beeinflussung des Maschinenelements repräsentierender thermischer Zustandswert ermittelt wird und daß aus dem thermischen Zustandswert für die ausgewählte Bearbeitungsmaschine ein Wert für einen Fehler in der Reproduktionsgenauigkeit bestimmt und bei der Bearbeitung eines der Werkstücke berücksichtigt wird.

Der Vorteil der erfindungsgemäßen Lösung ist darin zu sehen, daß diese die Möglichkeit bietet, die thermische Beeinflussung des jeweiligen Maschinenelements mit wenigen, im Extremfall sogar ohne Temperatursensoren zu ermitteln und bei der Bearbeitung eines der Werkstücke zu berücksichtigen, so daß einerseits die Zahl der Temperatursensoren reduziert, wenn nicht gegen Null gebracht, werden kann und außerdem dadurch auch zwangsläufig die Komplexität und Störanfälligkeit der Werkzeugmaschine verringert wird.

Darüber hinaus hat das erfindungsgemäße Verfahren den Vorteil, daß dieses universell auf alle Arten von Werkzeugmaschinen übertragbar ist, wobei die konstruktiven Gegebenheiten auf das Verfahren selbst ohne Einfluß sind und sich nur in Parametern, die in das Verfahren eingehen äußern, wobei diese Parameter experimentell, beispielsweise durch Eichzyklen, bestimmbar sind.

Ferner hat das erfindungsgemäße Verfahren den Vorteil, daß bereits bei Abgabe der Wärmeleistung durch die Wärmequelle die Änderung des thermischen Zustandswerts des jeweiligen Maschinenelements ermittelbar ist und somit die thermisch bedingte Verlagerung desselben ohne Zeitverzögerung ermittelbar, im Extremfall sogar vorhersehbar ist.

Im Rahmen des grundlegenden, vorstehend dargelegten erfindungsgemäßen Konzepts wurde nicht näher dargestellt, wie die Ermittlung des thermischen Zustandswerts auf der Basis des Wärmeleistungswerts der Wärmequelle erfolgen soll. Die Korrelation zwischen dem Wärmeleistungswert und dem thermischen Zustandswert läßt sich besonders dann einfach herstellen, wenn zur Ermittlung des thermischen Zustandswerts des Maschinenelements ein die in diese von der Wärmequelle eingekoppelte Wärmeleistung berücksichtigender Wärmeeintragswert ermittelt wird.

Ein derartiger Wärmeeintragswert kann beispielsweise experimentell für jede Werkzeugmaschine oder für einen Maschinentyp einer Werkzeugmaschine ermittelt werden und kann somit für alle Bearbeitungen mit einer derartigen Werkzeugmaschine oder mit einem derartigen Typ von Werkzeugmaschine verwendet werden.

Weiter sieht eine Weiterbildung des erfindungsgemäßen Verfahrens vor, daß der mindestens einen Baugruppe mindestens eine Wärmesenke zugeordnet wird und deren thermischer Einfluß bei der Ermittlung des thermischen Zustandswerts berücksichtigt wird.

Der Vorteil dieser Lösung ist darin zu sehen, daß damit die Möglichkeit besteht, noch genauer die thermischen Einflüsse auf ein Maschinenelement zu erfassen, insbesondere dann, wenn die Abkühlung des berücksichtigten Maschinenelements durch die Wärmesenke nicht mehr ausgeschlossen werden kann, insbesondere in Zeiten, in denen kein Wärmeeintrag erfolgt.

Besonders günstig läßt sich dies dann durchführen, wenn ein die bei inaktiver Wärmequelle von der Wärmesenke aus dem Maschinenelement ausgekoppelte Wärmeleistung berücksichtigender Wärmeleistungswert ermittelt wird. Mit einem derartigen Wärmeleistungswert läßt sich in einfacher Weise die Kopplung zwischen der Wärmesenke und dem Maschinenelement darstellen und erfassen.

Hinsichtlich der Art der Wärmesenken wurde bislang nicht differenziert. So sind beispielsweise Wärmesenken vorhanden, die unabhängig von dem Betriebszustand der Werkzeugmaschine Wärme abführen. Allerdings gibt es auch bei einer Werkzeugmaschine Wärmesenken, die je nach Betriebszustand der Wärmemaschine mehr oder weniger große Wärmeleistungen auskoppeln. Derartige von Betriebszuständen der Werkzeugmaschine abhängige Wärmesenken sind beispielsweise das Kühlmittel und die abgeführten Späne, die bei stillstehender Werkzeugmaschine nicht mehr vorhanden sind.

Aus diesem Grund sieht ein vorteilhaftes Ausführungsbeispiel vor, daß die aus dem Maschinenelement ausgekoppelte Wärmeleistung in Abhängigkeit von einzelnen Betriebszuständen der Werkzeugmaschine ermittelt wird.

Eine einfache Lösung des erfindungsgemäßen Verfahrens, die es ermöglicht, sowohl bei aktiven Wärmequellen als auch bei inaktiven Wärmequellen die wesentlichen ein- und ausgetragenen Wärmeleistungen zu erfassen, sieht daher vor, daß durch eine Berücksichtigung von Wärmeeintragswert und Wärmeaustragswert der thermische Zustandswert bestimmt wird.

Darüber hinaus wird die eingangs beschriebene Aufgabe alternativ oder ergänzend zu den vorstehend beschriebenen Lösungsvarianten bei einem Verfahren der eingangs beschriebenen Art erfindungsgemäß dadurch gelöst, daß mindestens einem Maschinenelement der Werkzeugmaschine eine Wärmequelle und eine Wärmesenke zugeordnet werden, daß ein eine bei aktiver Wärmequelle von dieser in das Maschinenelement eingekoppelte Wärmeleistung berücksichtigender Wärmeeintragswert und ein eine bei inaktiver Wärmequelle von der Wärmesenke aus dem Maschinenelement ausgekoppelte Wärmeleistung berücksichtigender Wärmeaustragswert ermittelt werden, daß durch Erfassung des Wärmeeintragswerts und des Wärmeaustragswerts ein die thermische Beeinflussung des Maschinenelements repräsentierender thermischer Zustandswert ermittelt wird und daß aus dem thermischen Zustandswert für die ausgewählte Bearbeitungsachse ein Wert für den Fehler in der Reproduktionsgenauigkeit bei der Bearbeitung eines der Werkstücke bestimmt wird.

Der Vorteil dieser Lösung ist darin zu sehen, daß diese zunächst unabhängig von der Art der Entstehung der Wärmeleistung sämtliche Wärmeströme in das jeweilige Maschinenelement und aus diesem jeweiligen Maschinenelement heraus erfaßt, um einen thermischen Zustandswert zu ermitteln und aus diesem thermischen Zustandswert dann auf den Fehler in der Reproduktionsgenauigkeit zu schließen.

Der Vorteil dieser Lösung ist insbesondere auch darin zu sehen, daß nicht unmittelbar bei dem jeweiligen Maschinenelement - wie dies beim Stand der Technik der Fall ist - die Temperatur und somit eine dem thermischen Zustandswert entsprechende Größe ermittelt wird, sondern daß die Ermittlung der Temperatur des jeweiligen Maschinenelements auf indirektem Wege erfolgt.

In all den Fällen, in denen der thermische Zustandswert durch einen Wärmeeintragswert ermittelt wird, ist es besonders günstig, wenn der Wärmeeintragswert nicht nur die in das jeweilige Maschinenelement eingekuppelte Wärmeleistung, sondern auch die von der Wärmesenke ausgekoppelte Wärmeleistung berücksichtigt. Dies hat den großen Vorteil, daß das erfindungsgemäße Verfahren erheblich vereinfacht wird, da bei der Ermittlung des thermischen Zustandswerts im Fall aktiver Wärmequellen nur der Wärmeeintragswert zu ermitteln ist und im Fall inaktiver Wärmequellen nur der Wärmeaustragswert. Ferner hat dieses Verfahren den großen Vorteil, daß sich die für die Ermittlung von Wärmeeintragswert und Wärmeaustragswert erforderlichen Parameter ohne großen mathematischen Aufwand experimentell, beispielsweise durch Eichprozesse, ermitteln lassen, da die einzige, den thermischen Einfluß repräsentierende Größe der Fehler in der Reproduktionsgenauigkeit ist, in welchen beispielsweise bei einer aktiven Wärmequelle sowohl eingekoppelte Wärmeleistungen als auch ausgekoppelte Wärmeleistungen eingehen. Damit können unmittelbar durch Erfassung der interessierenden Größe, nämlich des Fehlers in der Reproduktionsgenauigkeit, der Wärmeeintragswert und der Wärmeaustragswert bestimmt werden.

Eine besonders günstige Lösung sieht dabei vor, daß ein eine von der aktiven Wärmequelle abgegebene Wärmeleistung repräsentierender Wärmeleistungswert erfaßt und zur Ermittlung des Wärmeeintragswerts herangezogen wird. In diesem Fall ist es besonders einfach, den Wärmeeintragswert zu ermitteln, da dieser im einfachsten Fall durch einen Parameter repräsentiert werden kann, mit welchem der Wärmeleistungswert zu multiplizieren ist.

Hinsichtlich der Festlegung der Wärmequelle wurden im Zusammenhang mit der bisherigen Erläuterung der Ausführungsbeispiele des erfindungsgemäßen Verfahrens keine näheren Angaben gemacht. So wäre es beispielsweise denkbar, die Wärmequelle nach freiem Ermessen an unterschiedlichen Orten der Werkzeugmaschine festzulegen und von diesen ausgehend dann die Wärmeeintragswerte zu ermitteln.

Beispielsweise wäre es bei einer Ausführungsform der erfindungsgemäßen Lösung denkbar, eine Wärmequelle an einem Ort zu definieren, an welchem ein Temperatursensor in der Werkzeugmaschine angeordnet ist und nun ausgehend von diesem Ort des Temperatursensors die Wärmeflüsse, beispielsweise durch Wärmeeintragswerte und Wärmeaustragswerte zu ermitteln. Selbst diese erfindungsgemäße Lösung hätte signifikante Vorteile gegenüber den aus dem Stand der Technik bekannten Lösungen, da mit einem einer definierten Wärmequelle zugeordnete Temperatursensor eine Vielzahl von Wärmeflüssen erfaßt werden könnten.

Besonders günstig ist es jedoch, wenn der Wärmequelle ein Antriebsaggregat der Werkzeugmaschine zugeordnet wird und wenn der Wärmeleistungswert auf der Basis der von dem Antriebsaggregat aufgenommenen Leistung ermittelt wird. Diese Lösung kommt einerseits der Realität insofern nahe als sämtliche in der Werkzeugmaschine entstehenden Wärmeleistungen letztlich mit einem Antriebsaggregat zusammenhängen, sei es dadurch, daß das Antriebsaggregat die Leistung für die Zerspanung liefert, durch welche letztlich eine sehr hohe Wärmeleistung erzeugt wird, oder sei es dadurch, daß das Antriebsaggregat die Leistung für Achsbewegungen von Werkstück und Werkzeug liefert, die sich wiederum in Reibung äußern, die ebenfalls eine Wärmeleistung darstellt, die einzelne Maschinenelemente beeinflußt.

Ferner hat diese Lösung den großen Vorteil, daß der Wärmeleistungswert auf der Basis der von dem Antriebsaggregat aufgenommenen Leistung ermittelt werden kann und somit eine einfache Möglichkeit der Ermittlung des Wärmeleistungswerts besteht, ohne daß ein Temperatursensor erforderlich ist.

Hinsichtlich der Ermittlung der von dem Antriebsaggregat aufgenommenen Leistung sind ebenfalls die unterschiedlichsten Möglichkeiten denkbar. Eine erste grobe Näherung für die von dem Antriebsaggregat aufgenommene Leistung könnte bereits aus in einem Bearbeitungsprogramm der Werkzeugmaschine abgelegten Bearbeitungsabläufen abgeleitet werden. Beispielsweise wäre aus einer in einem Steuerprogramm vorgegebenen Zerspanungsart und einem entsprechenden Zerspanungsumfang bereits auf die von dem Antriebsaggregat aufgenommene Leistung zu schließen.

Noch besser ist es, wenn die von dem Antriebsaggregat aufgenommene Leistung aus Ansteuerparametern für dieses ermittelt wird, da die Ansteuerparameter recht präzise Daten für die Bestimmung des Wärmleistungswerts darstellen.

Noch vorteilhafter ist es jedoch, wenn die von dem Antriebsaggregat tatsächlich aufgenommene Leistung ermittelt wird. Dies läßt sich beispielsweise durch eine Messung der aufgenommenen Leistung oder eine exakte Erfassung der gesamten Steuerdaten für ein Antriebsaggregat ermitteln.

Hinsichtlich der Erfassung von Wärmeeintragswert und Wärmeaustragswert im Zusammenhang der bisherigen Ausführungsbeispiele wurden keine näheren Angaben gemacht. So sieht eine vorteilhafte Lösung vor, daß der Wärmeeintragswert oder der Wärmeaustragswert fortlaufend erfaßt werden, das heißt, daß fortlaufend Veränderungen, die durch Wärmeeintragswert oder Wärmeaustragswert entstehen, erkannt werden.

Dies läßt sich beispielsweise besonders günstig dann realisieren, wenn der Wärmeeintragswert oder der Wärmeaustragswert zu festgelegten Zeitpunkten erfaßt werden. Die Zeitpunkte könnten prinzipiell in einem beliebigen Zeitraster festgelegt werden. Ein besonders vorteilhafter Ablauf, der eine hinreichende Präzision bei der Erfassung von Wärmeeintragswert und Wärmeaustragswert ermöglicht, sieht vor, daß der Wärmeeintragswert oder der Wärmeaustragswert in einem festgelegten Takt erfaßt werden.

Darüber hinaus wurde im Zusammenhang mit der bisherigen Erläuterung der einzelnen Lösungsvarianten des erfindungsgemäßen Verfahrens nicht darauf eingegangen, in welcher zeitlichen Abfolge der thermische Zustandswert ermittelt werden soll. So sieht eine vorteilhafte Lösung vor, daß der thermische Zustandswert durch fortlaufende Berücksichtigung von Wärmeeintragswert und Wärmeaustragswert ermittelt wird.

Diese fortlaufende Berücksichtigung von Wärmeeintragswert und Wärmeaustragswert läßt sich besonders günstig dann realisieren, wenn bei der Ermittlung des aktuellen thermischen Zustandswerts der bereits vorliegende thermische Zustandswert sowie der aktuelle Wärmeeintragswert und/oder der aktuelle Wärmeaustragswert berücksichtigt werden, das heißt, daß der thermische Zustandswert bei jeder Berücksichtigung aktueller Wärmeaustragswerte oder Wärmeeintragswerte aktualisiert wird. Dieses Verfahren ist besonders geeignet, wenn es darum geht, ein möglichst einfaches und somit auch rechnerisch möglichst einfach realisierbares Verfahren zu finden, das andererseits allerdings die Möglichkeit schafft, den thermischen Zustandswert mit möglichst großer Präzision zu erfassen.

Eine besonders einfache Ermittlung des aktuellen thermischen Zustandswerts ergibt sich dann, wenn die Berücksichtigung des Wärmeeintragswerts und des Wärmeaustragswerts durch Summation des vorliegenden thermischen Zustandswerts sowie des Wärmeeintragswerts oder des Wärmeaustragswerts erfolgt.

Um auch eine einfach durchzuführende Vorgehensweise bei der Ermittlung des thermischen Zustandswerts zu schaffen, ist vorzugsweise vorgesehen, daß die Ermittlung des thermischen Zustandswerts unter Berücksichtigung von Wärmeeintragswert oder Wärmeaustragswert zu vorgegebenen Zeitpunkten erfolgt, wobei diese vorgegebenen Zeitpunkte beispielsweise ein festgelegter Takt oder festgelegte Zeitspannen zwischen den einzelnen Ermittlungen sind.

Besonders zweckmäßig läßt sich die Ermittlung dann gestalten, wenn der ermittelte thermische Zustandswert bis zur nächsten Ermittlung gespeichert wird, das heißt bei jeweils einem festgesetzten Zeitpunkt ein thermischer Zustandswert ermittelt, gespeichert und dann zum nächsten vorgesehenen Zeitpunkt wieder aktualisiert wird.

Hinsichtlich der Fortführung der Ermittlung des thermischen Zustandswerts wurden im Zusammenhang mit der bisherigen Erläuterung der erfindungsgemäßen Lösung keine näheren Angaben gemacht. So wäre es beispielsweise für eine grobe Kompensation thermischer Einflüsse ausreichend, den thermischen Zustandswert während des Betriebs der Werkzeugmaschine zu ermitteln, wobei der Betrieb der Werkzeugmaschine nicht nur eine aktuelle Bearbeitung eines Werkstücks, sondern auch das Wechseln eines Werkstücks und die Vorbereitung der erneuten Bearbeitung eines Werkstücks umfaßt.

Es hat sich jedoch gezeigt, daß auch ein vollständiges Stillsetzen der Werkzeugmaschine sich thermisch auf einzelne Maschinenelemente auswirken kann, so daß eine vorteilhafte Vorgehensweise der erfindungsgemäßen Lösung davon ausgeht, daß der thermische Zustandswert während des gesamten Betriebs der Werkzeugmaschinen und auch danach ermittelt wird, das heißt, daß selbst bei einer abgeschalteten Werkzeugmaschine noch weiterhin die thermischen Einflüsse ermittelt und berücksichtigt werden, wobei dies in der Regel Auswirkungen von aus den einzelnen Maschinenelementen ausgekoppelten Wärmeleistungen sind. Diese Vorgehensweise hat jedoch den Vorteil, daß auch außerhalb des Betriebs der Werkzeugmaschine deren thermischer Zustandswert erfaßt und fortgeschrieben wird, so daß bei einem Wiederinbetriebnehmen der Werkzeugmaschine ein thermischer Zustandswert vorliegt, der aus den bis zum Wiedereinschalten der Werkzeugmaschine sich ereigneten Abläufen abgeleitet ist.

Alternativ oder ergänzend hierzu ist es aber auch möglich, vor einem erneuten Einschalten einer Werkzeugmaschine den thermischen Zustandswert meßtechnisch zu ermitteln, beispielsweise über eine repräsentative Temperaturmessung an einem festgelegten Ort der Werkzeugmaschine, die dann entweder repräsentativ für die gesamte Werkzeugmaschine angenommen werden kann oder von welcher dann ausgehend mittels mathematischer Zusammenhänge die thermischen Zustandswerte der einzelnen Maschinenelemente oder einzelner Maschinenelemente bestimmt werden können.

Die bisherige Erläuterung des erfindungsgemäßen Konzepts im Zusammenhang mit den einzelnen Ausführungsbeispielen ging davon aus, daß einem Maschinenelement eine Wärmequelle zugeordnet ist. Das erfindungsgemäße Verfahren läßt sich jedoch insbesondere bei komplexen Maschinen in einfacher Weise auch an die bei diesen gegebenen Zusammenhänge dadurch anpassen, daß mehrere das Maschinenelement beeinflussende Wärmequellen erfaßt werden.

Dabei ist es besonders vorteilhaft, wenn die mehreren Wärmequellen nicht gemeinsam erfaßt werden, sondern wenn die mehreren Wärmequellen einzeln durch diesen entsprechende Wärmeeintragswerte erfaßt werden. Dies hat den großen Vorteil, daß einerseits die unterschiedliche Aktivierung der einzelnen Wärmequellen berücksichtigt werden kann und andererseits auch unterschiedliche, die Wärmeeintragswerte bestimmende Kopplungsfaktoren und Zeitkonstanten derselben berücksichtigt werden können.

Ein weiteres vorteilhaftes Ausführungsbeispiel sieht vor, daß mehrere das Maschinenelement beeinflussende Wärmesenken erfaßt werden. Dies hat den Vorteil, daß auch diesbezüglich der ausgekoppelten Wärmeleistung eine Anpassung an unterschiedliche Verhältnisse und unterschiedlich stark sowie gegebenenfalls auch zu unterschiedlichen Zeitpunkten wirksame Wärmesenken möglich ist.

Auch hier ist es besonders günstig, wenn die mehreren Wärmesenken einzeln durch diesen entsprechende Wärmeaustragswerte erfaßt werden, um die Wirkung der Wärmesenken hinsichtlich Ort, Zeit und Intensität trennen zu können.

Im Zusammenhang mit der bisherigen Erläuterung der einzelnen Ausführungsbeispiele des erfindungsgemäßen Verfahrens wurde nicht näher darauf eingegangen, wie der Wert für den Fehler in der Reproduktionsgenauigkeit Eingang in die Ansteuerdaten für die Werkzeugmaschine, das heißt insbesondere des Werkzeugs, findet. Beispielsweise wäre es denkbar, ständig den Wert für den Fehler in die Ansteuerdaten für die Werkzeugmaschine einfließen zu lassen. Damit wäre zwar einerseits die Möglichkeit geschaffen, eine ständige Berücksichtigung der thermischen Einflüsse auf die einzelnen Maschinenelemente durchzuführen, andererseits sind dadurch jedoch teilweise für die Bearbeitung von Werkstücken unabsehbare Folgen integriert, die sich wiederum in einer mangelhaften Genauigkeit der Werkstücke niederschlagen können.

Aus diesem Grund sieht eine vorteilhafte Lösung vor, daß der Wert für den Fehler zu ausgewählten Zeitpunkten in den Ansteuerdaten für die Bearbeitung berücksichtigt wird. Diese ausgewählten Zeitpunkte können dann so gewählt werden, daß keinerlei Beeinträchtigung der Qualität der Werkstücke erfolgt.

So sieht eine vorteilhafte Lösung vor, daß der Wert für den Fehler zu durch die Bearbeitung des Werkstücks vorgegebenen Zeitpunkten berücksichtigt wird, wobei diese Zeitpunkte zweckmäßigerweise so gewählt werden, daß keinerlei negative Auswirkungen auf die Bearbeitung des Werkstücks eintreten können. Eine Möglichkeit sieht vor, daß die Berücksichtigung des Wertes für den Fehler zwischen einzelnen Bearbeitungsschritten erfolgt, so daß ein Bearbeitungsschritt, beispielsweise das Bearbeiten einer Fläche, ohne Fehlerkorrektur erfolgt, jedoch der nächste Bearbeitungsschritt wiederum den Wert für den Fehler berücksichtigt.

Diese Vorgehensweise kann dahingehend ausgeweitet werden, daß zusammenhängende Bearbeitungsschritte ebenfalls zusammengefaßt werden und die Berücksichtigung des Wertes für den Fehler nach einzelnen hinsichtlich der Präzisionsanforderungen zusammenhängenden Bearbeitungsschritten erfolgt.

Es ist aber auch möglich, die Bearbeitungsschritte eines Werkstücks komplett zusammenzufassen und jeweils nach Bearbeitung eines Werkstücks den Wert für den Fehler in der Ansteuerung zu berücksichtigen, so daß das nachfolgende Werkstück wiederum entsprechend den berichtigten Steuerdaten bearbeitet wird.

Alternativ dazu ist es denkbar, die Berücksichtigung des Wertes für den Fehler zu durch Zeitinkremente vorgegebenen Zeitpunkten erfolgen zu lassen, beispielsweise zu hinreichend kleinen Zeitabständen, um die Korrektur sehr klein zu halten, so daß sich die damit sehr kleine Korrektur der Ansteuerungsdaten durch die Berücksichtigung des Fehlers nicht negativ auf die Teilegenauigkeit auswirken kann.

Die erfindungsgemäße Aufgabe wird außerdem durch eine Werkzeugmaschine zum Bearbeiten von Werkstücken, umfassend eine werkstücktragende Baugruppe, eine werkzeugtragende Baugruppe und eine Maschinensteuerung, welche thermische Einflüsse auf die Reproduktionsgenauigkeit der Werkstücke in mindestens einer ausgewählten Bearbeitungsachse durch Berücksichtigung der Erwärmung reduziert, erfindungsgemäß dadurch gelöst, daß die Maschinensteuerung mindestens einem Maschinenelement der Werkzeugmaschine mindestens eine Wärmequelle zuordnet, daß die Maschinensteuerung einen eine von der Wärmequelle entsprechend dem Betrieb der Werkzeugmaschine abgegebene Wärmeleistung repräsentierenden Wärmeleistungswert erfaßt und darauf basierend einen die thermische Beeinflussung des Maschinenelements repräsentierenden thermischen Zustandswert ermittelt und daß die Maschinensteuerung aus dem thermischen Zustandswert für die ausgewählte Bearbeitungsachse einen Wert für einen Fehler in der Reproduktionsgenauigkeit bestimmt und bei der Bearbeitung eines der Werkstücke berücksichtigt.

Die Vorteile der erfindungsgemäßen Werkzeugmaschine sind - in gleicher Weise wie bei dem erfindungsgemäßen Verfahren - darin zu sehen, daß eine einfache und kostengünstige Möglichkeit besteht, die thermischen Einflüsse auf die einzelnen Maschinenelemente mit einer ausreichenden Exaktheit zu erfassen und dann bei der Bearbeitung der Werkstücke zu berücksichtigen, ohne daß - wie bei dem Stand der Technik - die Kosten aufgrund der Vielzahl von benötigten Temperatursensoren gesteigert und die Komplexität und somit Störanfälligkeit der Werkzeugmaschine erhöht wird.

Ein weiterer Vorteil der erfindungsgemäßen Lösung ist darin zu sehen, daß mit der erfindungsgemäßen Lösung die Möglichkeit besteht, die thermischen Einflüsse der Wärmequelle auch ohne Zeitverzögerung zu ermitteln, da der thermische Einfluß nicht erst dann erfaßt wird, wenn er sich auf ein Maschinenelement, beispielsweise im Sinne einer Erhöhung einer Temperatur desselben, auswirkt, sondern bereits dann erfaßt werden kann, wenn in der Wärmequelle eine Wärmeleistung abgegeben werden kann, die sich dann mit Zeitverzögerung auf das Maschinenelement auswirkt. Somit kann bereits bei Entstehen der Wärmeleistung in der Wärmequelle vorausschauend der Einfluß auf den thermischen Zustandswert der entsprechenden Maschinenelemente ermittelt werden.

Ein vorteilhaftes Ausführungsbeispiel einer Weiterbildung einer erfindungsgemäßen Werkzeugmaschine sieht vor, daß die Maschinensteuerung zur Ermittlung des thermischen Zustandswerts des Maschinenelements einen die in diese von der Wärmequelle eingekoppelte Wärmeleistung berücksichtigenden Wärmeeintragswert ermittelt. Damit besteht über die Ermittlung des Wärmeeintragswerts eine einfache Möglichkeit, die Kopplung zwischen der Wärmequelle und dem jeweiligen Maschinenelement zu erfassen.

Darüber hinaus sieht eine weitere vorteilhafte Lösung vor, daß die Maschinensteuerung der mindestens einen Baugruppe mindestens eine Wärmesenke zuordnet und deren thermischer Einfluß bei der Ermittlung des thermischen Zustandswerts berücksichtigt. Diese Lösung hat außerdem den Vorteil, daß nicht nur Wärmequellen, sondern auch Wärmesenken berücksichtigt werden, die zumindest dann einen nennenswerten Einfluß haben, wenn keine der Wärmequellen aktiv ist.

Die Kopplung zwischen dem Maschinenelement und der Wärmesenke wird von der Maschinensteuerung vorzugsweise dadurch berücksichtigt, daß diese einen die bei inaktiver Wärmequelle von der Wärmesenke aus dem Maschinenelement ausgekoppelte Wärmeleistung berücksichtigenden Wärmeaustragswert ermittelt.

Besonders günstig ist es dabei, wenn die Maschinensteuerung die aus dem Maschinenelement ausgekoppelte Wärmeleistung in Abhängigkeit von den einzelnen Betriebszuständen der Werkzeugmaschine ermittelt, so daß auch die Möglichkeit besteht, Wärmesenken zu berücksichtigen, die sich in nennenswertem Umfang lediglich bei einzelnen Betriebszuständen der Werkzeugmaschine auf das jeweilige Maschinenelement auswirken, in anderen Betriebszuständen oder bei nicht mehr vorhandenem Betrieb jedoch keine Auswirkungen mehr haben.

Eine besonders günstige Lösung sieht vor, daß die Maschinensteuerung durch eine Berücksichtigung von Wärmeeintragswert und Wärmeaustragswert den thermischen Zustandswert bestimmt.

Alternativ oder ergänzend wird die eingangs genannte Aufgabe durch eine Werkzeugmaschine zum Bearbeiten von Werkstücken, umfassend eine werkstücktragende Baugruppe, eine werkzeugtragende Baugruppe und eine Maschinensteuerung, welche thermische Einflüsse auf die Reproduktionsgenauigkeit der Werkstücke in mindestens einer ausgewählten Bearbeitungsachse durch Berücksichtigung der Erwärmung reduziert, erfindungsgemäß dadurch gelöst, daß die Maschinensteuerung mindestens einem Maschinenelement der Werkzeugmaschine eine Wärmequelle und eine Wärmesenke zuordnet, daß die Maschinensteuerung einen eine von der aktiven Wärmequelle in das Maschinenelement eingekoppelte Wärmeleistung berücksichtigenden Wärmeeintragswert und ein eine bei inaktiver Wärmequelle von der Wärmesenke aus dem Maschinenelement ausgekoppelte Wärmeleistung berücksichtigenden Wärmeaustragswert ermittelt, daß die Maschinensteuerung durch Erfassung des Wärmeeintragswerts und des Wärmeaustragswerts einen die thermische Beeinflussung des Maschinenelements repräsentierenden thermischen Zustandswert ermittelt und daß die Maschinensteuerung aus dem thermischen Zustandswert für die ausgewählte Bearbeitungsachse einen Wert für den Fehler in der Reproduktionsgenauigkeit bei der Bearbeitung eines der Werkstücke bestimmt.

Der Vorteil dieser Lösung ist darin zu sehen, daß hiermit die Möglichkeit geschaffen wurde, den thermischen Zustandswert eines Maschinenelements ständig zu aktualisieren und fortzuschreiben und somit ohne eine Vielzahl von Sensoren die thermischen Zustandswerte der einzelnen Maschinenelement zu erfassen und fortzuschreiben.

Weitere vorteilhafte Ausführungsbeispiele der erfindungsgemäßen Werkzeugmaschine sind Gegenstand der Ansprüche 37 bis 50, deren Vorteile bereits im Zusammenhang mit der Erläuterung der Vorteile der entsprechenden Ausführungsbeispiele des erfindungsgemäßen Verfahrens erläutert wurden, so daß hinsichtlich der gesamten Vorteile von Ausführungsbeispielen gemäß dieser Unteransprüche auf die entsprechenden Ausführungsbeispiele des Verfahrens verwiesen werden kann.

Ein besonders vorteilhaftes Ausführungsbeispiel einer erfindungsgemäßen Werkzeugmaschine, welche es erlaubt, den thermischen Zustandswert auch über den Betrieb der Werkzeugmaschine hinaus fortzuschreiben sieht vor, daß die Maschinensteuerung eine Steuerungseinheit umfaßt, welche den thermischen Zustandswert über den Betrieb der Werkzeugmaschine hinaus unterstützt durch einen Energiespeicher ermittelt. Durch einen derartigen Energiespeicher, beispielsweise eine Batterie, wird die Steuerungseinheit in die Lage versetzt, nicht nur bei laufender Energieversorgung der Maschinensteuerung den thermischen Zustandswert zu erfassen und fortzuschreiben, sondern selbst bei nicht mehr mit Energie versorgter Maschinensteuerung die Fortschreibung fortzuführen und somit auch für die nächste Inbetriebnahme der Werkzeugmaschine einen aktuellen thermischen Zustandswert zur Verfügung zu stellen.

Weitere vorteilhafte Ausgestaltungen der erfindungsgemäßen Werkzeugmaschine sind Gegenstand der Ansprüche 51 bis 59, deren Vorteile ebenfalls bereits im Zusammenhang mit den entsprechenden Ausführungsbeispielen des erfindungsgemäßen Verfahrens erläutert wurden.

Weitere Merkmale und Vorteile der Erfindung sind Gegenstand der nachfolgenden Beschreibung sowie der zeichnerischen Darstellung eines Ausführungsbeispiels.

In der Zeichnung zeigen:

Fig. 1 eine schematische Draufsicht auf eine erfindungsgemäße Werkzeugmaschine;

Fig. 2 eine ausschnittsweise vergrößerte Darstellung des Verhältnisses von Werkzeug und Werkstück;

Fig. 3 eine beispielhafte schematische Darstellung des Zeitverhaltens von Verlagerungen unterschiedlicher Maschinenelemente in Abhängigkeit von thermischen Einflüssen auf diese und

Fig. 4 ein Ablaufdiagramm für einen Zyklus zur fortlaufenden Ermittlung eines thermischen Zustandswerts entsprechend der erfindungsgemäßen Lösung.

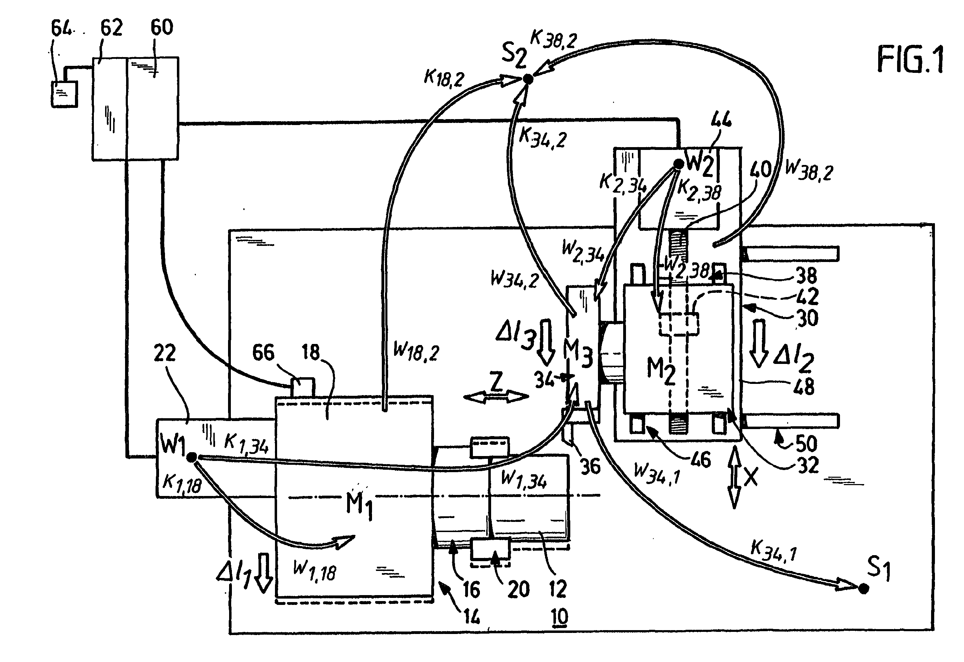

Ein Ausführungsbeispiel einer erfindungsgemäßen Werkzeugmaschine, dargestellt in Fig. 1, umfaßt ein schematisch dargestelltes und als Ganzes mit 10 bezeichnetes Maschinengestell, auf welchem eine ein Werkstück 12 tragende Baugruppe 14 angeordnet ist, die als Maschinenelemente beispielsweise einen eine Spindel 16 tragenden Spindelkasten 18 und ein an der Spindel 16 angeordnetes Spannfutter 20 zum Halten des Werkstücks umfaßt. Die Spindel 16 ist dabei durch einen Spindelmotor 22 angetrieben, der ebenfalls an dem Spindelkasten 18 gehalten ist.

Die gesamte werkstücktragende Baugruppe sitzt dabei als Ganzes auf dem Maschinengestell 10.

Ferner sitzt auf dem Maschinengestell 10 eine als Ganzes mit 30 bezeichnete werkzeugtragende Baugruppe, welche als Maschinenelemente einen in Richtung einer X-Achse bewegbaren Werkzeugschlitten 32 umfaßt, der als weiteres Maschinenelement beispielsweise einen Werkzeugrevolver 34 trägt, an welchem ein Werkzeug 36 gehalten ist.

Der Werkzeugschlitten 32 ist mittels eines als Ganzes mit 38 bezeichneten Linearantriebs, welcher eine Verstellspindel 40 und eine Spindelmutter 42 umfaßt, verstellbar, wobei die Verstellspindel 40 durch einen Stellantrieb 44 antreibbar ist.

Beispielsweise ist der Werkzeugschlitten in Richtung der X-Achse noch auf einer Linearführung 46 relativ zum Maschinengestell 10 geführt.

Dabei sitzt vorzugsweise die Linearführung 46 ihrerseits nochmals auf einem in Richtung einer Z-Achse verschiebbaren Werkzeugschlitten 48, der seinerseits gegenüber dem Maschinengestell 10 ebenfalls auf einer parallel zur Z-Achse verlaufenden Linearführung 50 geführt ist.

Aus Gründen der Einfachheit wird die erfindungsgemäße Lösung lediglich im Hinblick auf thermische Einflüsse in Richtung der von einer Maschinensteuerung 60 steuerbaren X-Achse der Werkzeugmaschine erläutert. Die erfindungsgemäße Lösung kann aber auch auf eine Vielzahl von Achsen angewandt werden.

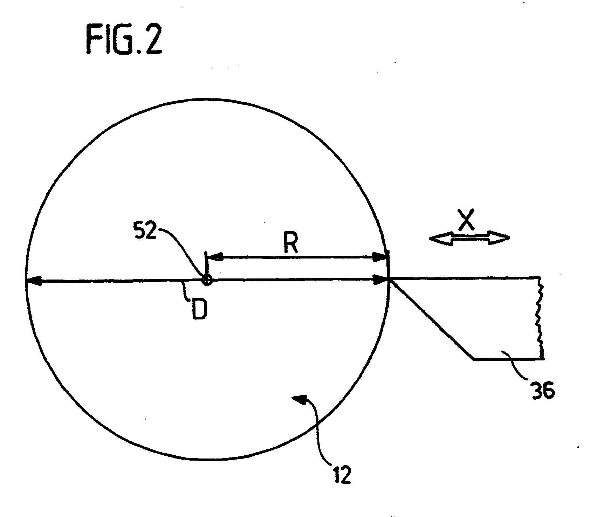

Soll nun, wie in Fig. 2 dargestellt, eine Drehbearbeitung des Werkstücks 12 erfolgen, so ist das Werkzeug 36 in einem für einen gewünschten Durchmesser D des Werkstücks 12 erforderlichen Radius R von einer Drehachse 52 zu positionieren, wobei dieser gewünschte und von einem Programm der Maschinensteuerung 60 vorgegebene Radius R dann einen Fehler aufweist, wenn sich aufgrund thermischer Einflüsse das Werkzeug 36 und das Werkstück 12 und mit diesem die Drehachse 52 relativ zueinander in Richtung der X-Achse verlagern.

Eine derartige Verlagerung kann beispielsweise dann eintreten, wenn sich, wie in Fig. 1 dargestellt, der Spindelkasten 18 mit der Masse M1 erwärmt und diese Erwärmung zu einer Verlagerung des gesamten Spindelkastens 18 um einen Betrag $\Delta l_1$ in X-Richtung führt, wodurch sich unter der Annahme, daß das Werkzeug 36 thermisch unverändert positioniert bleibt, der Radius R vergrößern würde.

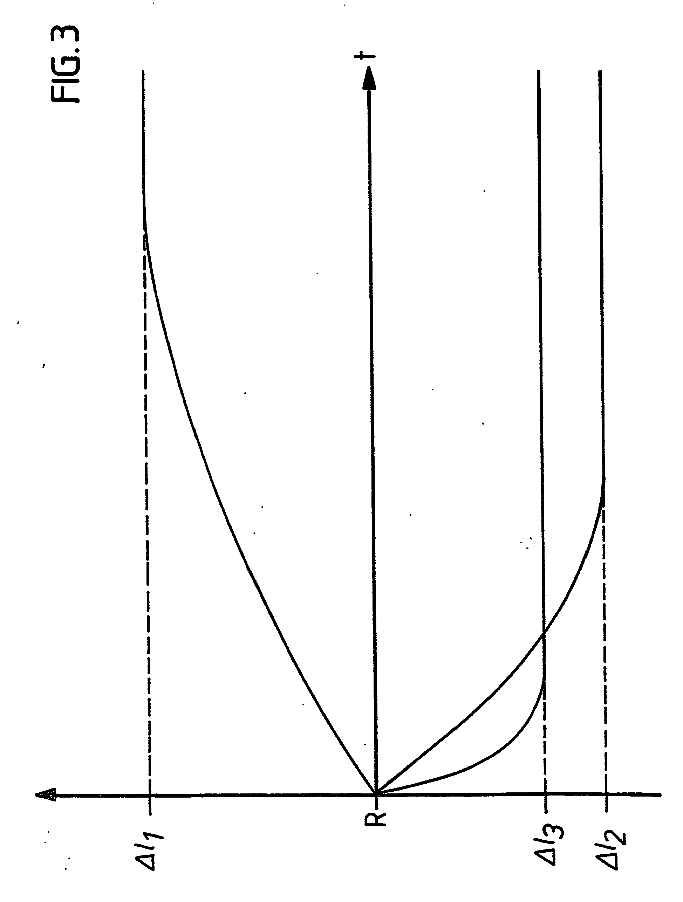

Die Erwärmung des Spindelkastens 18 mit der relativ großen Masse M1 erfolgt beispielsweise mit einer sehr langsamen Zeitkonstante, wie in Fig. 3 dargestellt. Somit ändert sich der Radius R des Werkstücks aufgrund der Verlagerung des Spindelkastens 18 um $\Delta l_1$ in Richtung der X-Achse dahingehend, daß der Radius R um $\Delta l_1$ im Laufe der Zeit größer wird, wie dies in Fig. 3 dargestellt ist.

Erwärmt sich der Linearantrieb 38 und mit diesem der Werkzeugschlitten 32, so führt dies durch Längung der Verstellspindel 40 zu einer Verschiebung des Werkzeugschlittens 32 in Richtung des Werkstücks 12 und somit zu einer verstärkten Zustellung des Werkzeugs 36 in Richtung des Werkstücks 12, so daß der Radius R um die Strecke$\Delta l_2$, um welche eine Verstellung des Werkzeugschlittens 32 in X-Richtung erfolgt, beispielsweise kleiner wird.

Ferner führt eine Erwärmung des Werkzeugrevolvers 34 und des Werkzeugs 36 zu einer weiteren Verschiebung des Werkzeugs 36 in Richtung des Werkstücks 12 und somit beispielsweise zu einer Verringerung des Radius R um $\Delta l_3$, wie in Fig. 3 dargestellt.

Alle diese Veränderungen des Radius R um die Verlagerung $\Delta l_1$, $\Delta l_2$ und $\Delta l_3$ sind gleichzeitig repräsentativ für den Temperaturverlauf in den jeweiligen Maschinenelementen und in Fig. 3 lediglich zur vereinfachten Erläuterung so dargestellt, daß alle Längenänderungen gleichzeitig einsetzen.

Jede dieser thermisch bedingten Verlagerungen $\Delta l_1$, $\Delta l_2$ und $\Delta l_3$ in der X-Richtung ergibt sich vereinfacht ausgedrückt, aus folgender Formel $\Delta l = \Delta T \times l \times \alpha$, wobei $\Delta T$ die Erwärmung gegenüber dem Ausgangszustand, L die Wirklänge in Richtung der X-Achse und $\alpha$ der Längenausdehnungskoeffizient des beteiligten Materials des jeweiligen Maschinenelements 18, 38, 34 ist.

Ferner unterliegt die Temperaturerhöhung $\Delta T$ dem Zusammenhang $\Delta T = Q \times (1\text{-EXP}(\text{-}t\ \tau))$, wobei Q die insgesamt bis zum Gleichgewichtszustand aufgenommene Wärmemenge, t die Zeit und $\tau$ die Zeitkonstante ist, mit welcher die Temperaturerhöhung eintritt. Diese Zeitkonstante ist unter anderem abhängig von der Masse M1, M2 oder M3 des jeweiligen Maschinenelements 18, 38, 34.

Dabei wurde bislang nicht im einzelnen ausgeführt, woher die zugeführte Wärmeenergie kommt und wie diese ermittelt wird.

Erfindungsgemäß wird davon ausgegangen, daß die Maschinensteuerung 60 beispielsweise den Spindelmotor 22 ansteuert und somit die Maschinensteuerung 60 die Möglichkeit hat, die vom Spindelmotor 22 aufgenommene Leistung zu erfassen.

Die Leistung des Spindelmotors 22 wird, abgesehen von geringen Leistungsverlusten im Spindelmotor 22 und in der Lagerung der Spindel 16 im Spindelkasten, im wesentlichen bei der Zerspanung des Werkstücks 12 mittels des Werkzeugs 36 verbraucht, so daß im Prinzip die Eingriffstelle des Werkzeugs 36 am Werkstück 12 der Ort ist, an welchem ein wesentlicher Teil der Wärmeleistung entsteht, welche zur Erwärmung der Baugruppen 14 und 30 sowie deren Maschinenelemente, wie beispielsweise dem Werkzeugrevolver 34 dient.

Ein Teil der Wärmeleistung geht jedoch auch in die Spindel 16 und den Spindelkasten 18 und ferner führt ein Teil des Leistungsverlustes im Spindelmotor 22 und in der Lagerung des Spindelkastens 18 ebenfalls zu einer Erwärmung des Spindelkastens 18 mit der Masse M1.

Aus diesem Grund besteht im Rahmen der erfindungsgemäßen Lösung die Möglichkeit, die Eingriffstelle des Werkzeugs 36 am Werkstück 12 als Wärmequelle anzusehen, welche eine Wärmeleistung erzeugt, die größenordnungsmäßig der vom Spindelmotor 22 aufgenommenen Wärmeleistung entspricht.

Alternativ dazu besteht aber auch die Möglichkeit, den Spindelmotor 22 unmittelbar als Wärmequelle zu betrachten, welche ungefähr eine Wärmeleistung erzeugt, die der dem Spindelmotor 22 aufgenommenen Leistung entspricht, wobei diese Wärmeleistung durch einer dieser beispielsweise im einfachsten Fall proportionalen Wärmeleistungswert $WL_1$ repräsentiert wird.

Aus diesem Grund wird nun erfindungsgemäß zur Ermittlung der einzelnen Maschinenteile 18, 38 und 34 eine Wärmequelle $W_1$ angenommen, von welcher ausgehend wie in Fig. 1 dargestellt, mit einem Kopplungsfaktor $K_{1,18}$ eine Wärmeleistung $W_{1,18}$ dem Spindelkasten 18 zugeführt wird.

Ferner wird von der Wärmequelle $W_1$ mit einem Kopplungsfaktor $K_{1,34}$ eine Wärmeleistung $W_{1,34}$ dem Werkzeugrevolver 34 zugeführt, und beispielsweise kann eine von der Wärmequelle $W_1$ dem Linearantrieb 38 zugeführte Wärmeleistung vernachlässigt werden.

Eine zweite Wärmequelle $W_2$ ergibt sich beispielsweise aufgrund der zwischen der Verstellspindel 40 und der Spindelmutter 42 auftretenden Reibung beim Verstellen des Werkzeugschlittens 32. Diese Reibung ergibt eine Wärmeleistung, die sich auf den Linearantrieb 38 mit dem Werkzeugschlitten 32 auswirkt und diese aufwärmt.

Ferner kann über den Werkzeugschlitten 32 auch eine Erwärmung des Werkzeugrevolvers 34 auftreten.

Die durch Reibung entstehende Wärmeleistung liegt jedoch in der gleichen Größenordnung wie die von dem Stellantrieb 44 zum Drehen der Verstellspindel 40 aufgenommene Leistung, welche durch einen dieser beispielsweise im einfachsten Fall proportionalen Wärmeleistungswert $WL_2$ repräsentiert wird, so daß auch alternativ dazu die Wärmequelle $W_2$ am Stellantrieb 44 angenommen werden kann und somit ausgehend von der Wärmequelle $W_2$ mit einem Kopplungsfaktor $K_{2,38}$ dem Linearantrieb 38 die Wärmeleistung $W_{2,38}$ zugeführt wird.

Ferner erfolgt über die Wärmequelle $W_2$ mit einem Kopplungsfaktor $K_{2,34}$ eine Zufuhr von Wärmeleistung $W_{2,34}$ in den Werkzeugrevolver 34.

Darüber hinaus ist bei der erfindungsgemäßen Werkzeugmaschine auch eine Auskopplung von Wärmeleistung in Betracht zu ziehen. Ein wesentlicher Teil der bei einer Drehbearbeitung entstehenden Wärme wird mit dem Kühlmittel und den Spänen abgeführt. Aus diesem Grund wird eine Wärmesenke $S_1$ definiert, welche über einen Kopplungsfaktor $K_{34,1}$ Wärme von der Einheit aus Werkzeugrevolver 34 und Werkzeug 36 abführt.

Ferner erfolgt eine generelle Abkühlung der einzelnen Baugruppen 14, 30 durch Abgabe von Wärme an die Umgebung, wobei dies beispielsweise durch Umgebungsluft, teilweise auch durch zwangsgeführte Umgebungsluft, erfolgen kann. Aus diesem Grund wird eine Wärmesenke $S_2$ definiert, welche mit einem Kopplungsfaktor $K_{18,2}$ die Wärmeleistung $W_{18,2}$ aus dem Spindelkasten auskoppelt.

In gleicher Weise koppelt die Wärmesenke $S_2$ mit einem Kopplungsfaktor $K_{34,2}$ die Wärmeleistung $W_{34,2}$ aus dem Werkzeugrevolver 34, das heißt insbesondere der Einheit aus Werkzeugrevolver 34 und Werkzeug 36, aus und schließlich erfolgt über einen Kopplungsfaktor $K_{38,2}$ die Auskopplung der Wärmeleistung $W_{38,2}$ aus dem Linearantrieb 38.

Somit läßt sich beispielsweise die Temperaturänderung $\Delta T$ des Werkzeugrevolvers 34 ausgehend von einer Ausgangstemperatur dadurch beschreiben, daß eine Bilanzierung sämtlicher Wärmeflüsse erfolgt, also beispielsweise der eingekoppelten Wärmeleistungen $W_{1,34}$ und $W_{2,34}$ sowie der ausgekoppelten Wärmeleistungen $W_{34,1}$ und $W_{34,2}$. Aus dieser Bilanzierung kann dann insgesamt die einen thermischen Zustandswert repräsentierende Temperatur $\Delta T$ ermittelt werden, welche zu der Verlagerung $\Delta l_3$ des Werkzeugrevolvers 34 führt.

In gleicher Weise läßt sich durch Bilanzierung der eingekoppelten Wärmeleistung $W_{2,38}$ und der ausgekoppelten Wärmeleistung $W_{38,2}$ der thermische Zustandswert des Linearantriebs 38 und somit die durch diesen bedingte Verlagerung $\Delta l_2$ bestimmen.

Die gleiche Vorgehensweise ist für die Bestimmung der Verlagerung $\Delta l_1$ durch Bilanzierung der Wärmeleistungen $W_{1,18}$ und $W_{18,2}$ möglich.

Bei diesen Bilanzierungen ist zu beachten, daß die Wärmeleistungen aus den Wärmequellen $W_1$ und $W_2$ vollständig von dem Betrieb der Werkzeugmaschine abhängen, also beispielsweise davon abhängen, ob der Spindelmotor 22 überhaupt läuft und wenn ja mit welcher Leistung. Gleiches gilt für den Verstellantrieb 40.

Damit hängen auch die Wärmeleistungen $W_{1,18}$, $W_{1,34}$, $W_{2,38}$ und $W_{2,34}$ von dem Betrieb der Werkzeugmaschine, das heißt dem Betrieb des Spindelmotors 22 bzw. dem Betrieb des Stellantriebs 44 ab.

Bei der in die Wärmesenke $S_2$ ausgekoppelten Wärmeleistung $W_{18,2}$, $W_{34,2}$ und $W_{38,2}$ ist eine Abhängigkeit von dem Betrieb der Werkzeugmaschine nicht gegeben, es besteht lediglich eine Abhängigkeit hinsichtlich der Temperaturdifferenz zwischen dem jeweiligen Maschinenelement 18, 38, 34 und der Umgebung.

Allerdings ist zu beachten, daß die Wärmeleistungen $W_{18,2}$, $W_{34,2}$ und $W_{38,2}$ auch dann ausgekoppelt werden, wenn die Werkzeugmaschine stillsteht, sogar im Fall, daß die Werkzeugmaschine abgeschaltet ist.

Die Wärmesenke $S_1$ und die von dieser ausgekoppelte Wärmeleistung $W_{34,1}$ hängt insoweit von dem Betrieb der Werkzeugmaschine ab, als nur bei einer Bearbeitung des Werkstücks 12 ein Kühlmittelfluß vorliegt, und Späne entstehen, während die bei nicht durchgeführter Bearbeitung des Werkstücks 12 mittels des Werkzeugs 36 nicht der Fall ist. Aus diesem Grund ist auch die ausgekoppelte Wärmeleistung $W_{34,1}$ von dem aktuellen Betriebszustand der Werkzeugmaschine abhängig und damit diese Abhängigkeit bei der Bilanzierung der Wärmeleistungen zu berücksichtigen.

Die Bilanzierung der einzelnen Wärmeleistungen $W$ läßt sich einerseits besonders einfach und andererseits mit hinreichender Genauigkeit dann durchführen, wenn zu jedem der Maschinenelemente 18, 34, 38 in Zeiträumen der aktiven Wärmequellen $W_1$, $W_2$ die eingekoppelten und ausgekoppelten Wärmeleistungen $W$ bilanziert, jedoch nach den Wärmequellen $W_1$, $W_2$ getrennt, betrachtet werden und außerdem in Zeiträumen nicht aktiver Wärmequellen die ausgekoppelten Wärmeleistungen - soweit erforderlich nach Wärmesenken $S$ getrennt - betrachtet werden.

Erfindungsgemäß werden beispielsweise beim Maschinenelement 34 die Wärmeleistungen $W_{1,34}$ und $W_{2,34}$ getrennt berücksichtigt, da diese aus den verschiedenen Wärmequellen $W_1$ und $W_2$ stammen und diese Wärmequellen $W$, $W_2$ während unterschiedlichen Zeiträumen aktiv sein können.

Ferner werden bei Berücksichtigung der Wärmeleistungen die Wärmesenken, insoweit als sie aktiv sind, mitberücksichtigt. Die Wärmesenke $S_1$ ist bei einer Drehbearbeitung stets aktiv, da Kühlmittel zugeführt wird und Späne entstehen. Ferner ist unabhängig von einer Drehbearbeitung die Wärmesenke $S_2$ aktiv, da stets Wärme an die Umgebung abgegeben wird.

Aus diesem Grund berücksichtigt ein Wärmeeintragswert $WE_{1,34}$ der Wärmequelle $W_1$ die jeweils in das entsprechende Maschinenelement 34 eingekoppelte Wärmeleistung $W_{1,34}$ sowie die ausgekoppelten Wärmeleistungen $W_{34,1}$ und $W_{34,2}$. Der Wärmeeintragswert kann daher wie folgt angegeben werden:

$$WE_{1,34} \sim (W_{1,34} - W_{34,1} - W_{34,2}).$$

Der vom Wärmeeintragswert $WE_{1,34}$ der Wärmequelle $W_1$ getrennt erfaßte Wärmeeintragswert $WE_{2,34}$ der Wärmequelle $W_2$ berücksichtigt jeweils die in das Maschinenelement 34 eingekoppelte Wärmeleistung $W_{2,34}$ sowie die ausgekoppelte Wärmeleistung $W_{34,2}$. Da die Verlagerung des Werkzeugträgers 34 hauptsächlich nur während der Bearbeitung des Werkstücks 12 erfolgt, ist aus Gründen der Einfachheit davon auszugehen, daß auch die zur Wärmesenke $S_2$ ausgekoppelte Wärmeleistung $W_{34,2}$ im Wärmeeintragswert $WE_{2,34}$ berücksichtigt ist, so daß der Wärmeeintragswert $WE_{2,34}$ wie folgt angesetzt werden kann

$$WE_{2,34} \sim (W_{2,34} - W_{34,1} - W_{34,2}).$$

Berücksichtigt man ferner, daß die Wärmeeintragswerte $WE_{1,34}$ und $WE_{2,34}$ mit möglichst einfach bestimmbaren Zusammenhängen mit den über eine Leistungsmessung bestimmbaren Wärmeleistungswerten $WL_1$ und $WL_2$ der Wärmequellen $W_1$ und $W_2$ korreliert sein sollten, so lassen sich folgende Relationen hierfür ansetzen:

$$WE_{1,34} \approx PW_{1,34} \times WL_1$$

$$WE_{2,34} \approx PW_{2,34} \times WL_2$$

wobei $PW_{1,34}$ und $PW_{2,34}$ für die jeweilige Werkzeugmaschine, vorzugsweise maschinentypspezifisch experimentell bestimmbare Parameter sind, welche die gesamten ein- und ausgekoppelten Wärmeleistungen repräsentieren.
Ferner wird in den Zeiträumen, in denen keine der Wärmequellen $W_1$, $W_2$, aktiv ist nur der Einfluß der Wärmesenken $S_1$, $S_2$ berücksichtigt.
Geht man in erster Näherung davon aus, daß Kühlmittel nur dann fließt, wenn eine Bearbeitung des Werkstücks 12 erfolgt, so ist die Wärmesenke $S_1$ bei nicht aktiven Wärmequellen $W_1$, $W_2$ ebenfalls nicht aktiv und deshalb außerhalb der Zeiträume aktiver Wärmesenken $W_1$, $W_2$ nicht zu berücksichtigen.
Somit bleibt der Einfluß der Wärmesenke $S_2$ in den Zeiträumen außerhalb der Bearbeitung des Werkstücks 12 allein maßgebend, so daß ein Wärmeaustragswert $WA_{34}$ wie folgt angesetzt werden kann,

$$WA_{34} \sim W_{34,2}$$

Damit kann auch für den Wärmeaustragswert folgender Parameterzusammenhang angegeben werden

$$WA_{34} \approx PS_{34,2}$$

und $PS_{2,34}$ ein experimentell für die jeweilige Werkzeugmaschine, vorzugsweise maschinentypspezifischer, experimentell bestimmbarer Parameter ist.
Der Vorteil einer derartigen Festlegung der Wärmeeintragswerte $WE_{1,34}$ und $WE_{2,34}$ sowie des Wärmeaustragswerts ist darin zu sehen, daß die Erfassung der zur Ermittlung dieser Wärmeeintragswerte erforderlichen Einflußgrößen und Parameter einfach ist, da als Einflußgrößen lediglich die Wärmeleistungswerte $WL_1$ und $WL_2$ zu ermitteln sind, die von dem Spindelmotor 22 und dem Stellantrieb 44 aufgenommenen Leistungen repräsentieren, und die Anpaßparameter $PW_{1,34}$ und $PW_{2,34}$, die Auswirkungen dieser Wärmeleistungswerte $WL_1$ und $WL_2$ auf die Verlagerung $\Delta l_3$ angeben, wobei die Anpaßparameter $PW_{1,34}$ und $PW_{2,34}$ beispielsweise dadurch ermittelbar sind, daß eine Bestimmung von $\Delta l_3$ nach jeweils getrennter Aktivierung der Wärmequellen $W_1$ und $W_2$ erfolgt.
Ferner ist auch $WA_{34,2}$ einfach ermittelbar, nämlich ausgehend von dem die Temperatur repräsentierenden thermischen Zustandswert Z des Maschinenelements 34 und einem die Abkühlung bestimmenden Parameter $PS_{34,2}$ in Abhängigkeit von bestimmten Zeiträumen nach Deaktivierung beider Wärmequellen $W_1$ und $W_2$.
Anhand analoger Betrachtungen lassen sich die Verhältnisse im Fall der Maschinenelemente 18 und 38 bestimmen

$$WE_{1,18} \sim (W_{1,18} - W_{18,2})$$

$$WE_{2,38} \sim (W_{2,38} - W_{38,2})$$

und

$$WA_{18,2} \sim (W_{18,2})$$

$$WA_{38,2} \sim (W_{38,2}).$$

Mittels somit beispielsweise fortlaufend nach definierten Zeitinkrementen bestimmter Wärmeeintragswerte WE und WA lasen sich die jeweils aktuellen thermischen Zustandswerte $Z'_{18}$, $Z'_{38}$ und $Z'_{34}$ für jedes der einzelnen Maschinenelemente 18, 38 und 34 fortlaufend gemäß der Formel

$$Z' = Z \text{ (vorher)} + WE_1 + WE_2$$

oder

$$Z' = Z \text{ (vorher)} - WA$$

ermitteln.

Mit diesen aktuellen Zustandswerten $Z'_{18}$, $Z'_{38}$, $Z'_{34}$ sind dann die jeweiligen thermischen Verlagerungen der einzelnen Maschinenelemente 18, 38 und 34 ermittelbar, und zwar nach der Formel

$$\Delta l_1 = Z'_{18} \times PL_{18}$$

$$\Delta l_2 = Z'_{38} \times PL_{38}$$

$$\Delta l_1 = Z'_{34} \times PL_{34}$$

.

wobei in die Parameter $PL_{18}$, $PL_{38}$ und $PL_{34}$ die Wärmeausdehnungskoeffizienten $\alpha$ und die Wirklängen L eingehen die für jede Werkzeugmaschine, vorzugsweise maschinentypspezifisch, festlegbar sind.

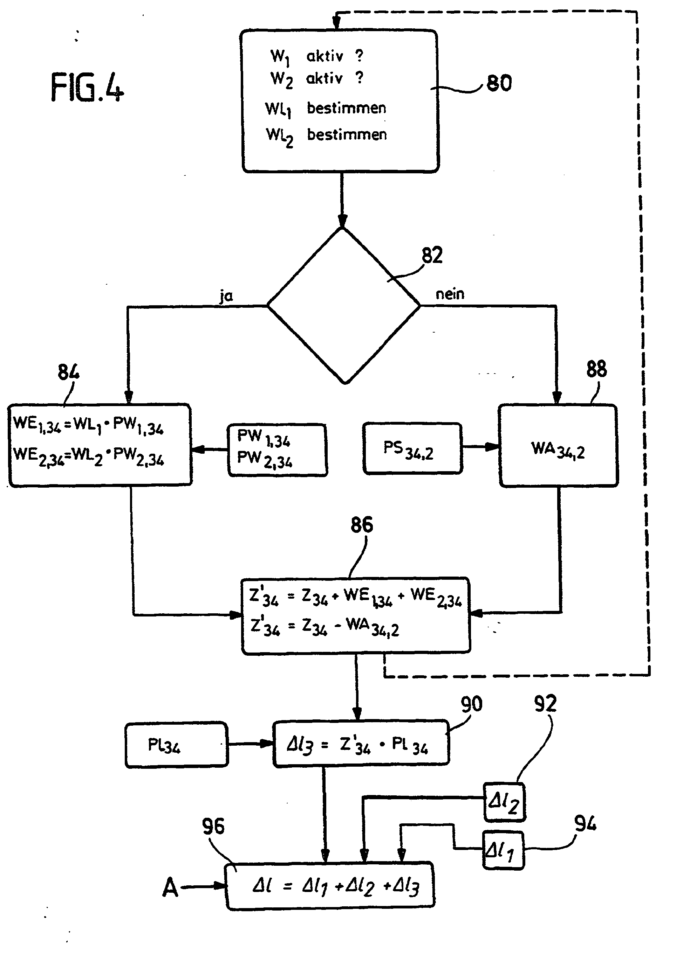

Eine derartige Erfassung der Wärmeeintragungswerte WE und Wärmeaustragungswerte WA kann beispielsweise gemäß dem in Fig. 4 dargestellten Flußdiagramm zyklisch erfolgen, wobei die die Ermittlung des die Temperatur T und somit auch die Temperaturerhöhung $\Delta T$ repräsentierenden thermischen Zustandswertes Z aus den Wärmeeintragswerten WE und den Wärmeaustragswerten WA für den Fall des Werkzeugrevolvers 34 als Maschinenelement dargestellt ist.

Ein derartiger Zyklus wird beispielsweise jeweils nach einem Zeitinkrement $\Delta t$ durchlaufen.

In einem ersten Schritt, dargestellt durch den Block 80 wird überprüft, ob eine der Wärmequellen $W_1$ oder $W_2$ aktiviert ist und welche Wärmeleistungswerte $WL_1$ und $WL_2$ diesen Wärmequellen $W_1$ und $W_2$ zuzuordnen sind.

Ist mindestens eine der Wärmequellen $W_1$ oder $W_2$ aktiv, so wird durch einen Block 82 entschieden, daß in einen Block 84 überzugehen ist, in welchem je nach dem ob die Wärmequellen $W_1$ und/oder $W_2$ aktiv sind, die Wärmeeintragswerte $WE_{1,34}$ und/oder $WE_{2,34}$ ermittelt werden.

Nach Ermittlung der Wärmeeintragswerte $WE_{1,34}$ und/oder $WE_{2,34}$ erfolgt dann in einem Block 86 eine Neufestsetzung des thermischen Zustandswertes, wobei der neu festgesetzte aktuelle thermische Zustandswert Z' dem thermischen Zustandswert Z des vorhergehenden Zyklus $+WE_{1,34} + WE_{2,34}$ entspricht.

Wird dagegen in Block 80 festgestellt, daß keine der Wärmequellen $W_1$, $W_2$ aktiv ist, so entscheidet der Block 82, daß auf einen Block 88 überzugehen ist, in welchem mittels des Parameters $PS_{34,2}$ der Wärmeaustragswert $WA_{34,2}$ ermittelt wird. Mit diesem Wärmeaustragswert $WA_{34,2}$ wird dann im Block 86 der neue aktuelle thermische Zustandswert Z' ermittelt, welcher dem thermischen Zustandswert Z des vorhergehenden Zyklus minus dem Wärmeaustragswert WA entspricht.

Mit diesem neuen thermischen Zustandswert Z' wird dann durch Multiplikation mit einem Längenparameter $PL_{34}$ in einem Block 90 die Verlagerung $\Delta l_3$ bestimmt, wobei diese im einfachsten Fall ein Produkt aus dem thermischen Zustandswert Z' und dem Parameter $PL_{34}$ darstellt.

In gleicher Weise läßt sich in einem durch einen Block 92 dargestellten Gesamtzyklus auch die Verlagerung $\Delta l_2$ ermitteln, und in einem durch einen Block 94 insgesamt dargestellten Zyklus die Verlagerung $\Delta l_1$, so daß dann in einem

Block 96 die Summe aller Verlagerungen $\Delta l = \Delta l_1 + \Delta l_2 + \Delta l_3$ ermittelt werden kann, welche dann einen Wert für eine Korrektur der Ansteuerung des Werkzeugs 36 darstellt.

Die Ausführung einer derartigen Korrektur ist beispielsweise durch ein Aktivierungssignal A aktivierbar, da es bei einer Vielzahl von Bearbeitungen, wie beispielsweise der Bearbeitung einer Passungsfläche, nicht sinnvoll ist, während der Bearbeitung Korrekturen in der Ansteuerung des Werkzeugs vorzunehmen, da die Vornahme einer derartigen Korrektur eine "Stufe" oder "Rille" in der herzustellenden Fläche zur Folge haben könnte.

Aus diesem Grund ist vorzugsweise vorgesehen, daß das Aktivierungssignal A zumindest nach Durchführung einer Bearbeitung einer zusammenhängenden Fläche am Werkstück 12 gegeben wird und somit erst bei Bearbeitung der nachfolgenden Flächen die während der Bearbeitung der vorangehenden Fläche aufgetretenen thermischen Verlagerungen berücksichtigt werden.

Vielfach stehen jedoch auch mehrere Flächen in einem Funktionszusammenhang, so daß es sinnvoll ist, die thermischen Verlagerungen $\Delta l$ erst nach der Bearbeitung eines Satzes von miteinander in Funktionszusammenhang stehenden Flächen vorzunehmen.

Die Zusammenfassung der Bearbeitung mehrerer Flächen ohne Korrektur der thermischen Verlagerung $\Delta l$ kann sogar soweit gehen, daß die thermische Verlagerung $\Delta l$ jeweils zu Beginn der Bearbeitung eines neuen Werkstücks 36 berücksichtigt wird und während der gesamten Bearbeitung eines Werkstücks 36 die thermische Verlagerung $\Delta l$ unberücksichtigt bleibt.

Um die Abkühlung der einzelnen Maschinenelemente 18, 38 und 34 auch dann erfassen zu können, wenn die Werkzeugmaschine nicht mehr arbeitet, ja sogar in Fällen, in denen die Werkzeugmaschine stillgesetzt ist, ist die Maschinensteuerung 60 mit einem Steuerungsteil 62 versehen, welche die in Fig. 4 dargestellten Zyklen zur Ermittlung der einzelnen thermischen Zustandswerte Z' für die einzelnen Maschinenelemente 18, 38, 34 abarbeitet und mit einem eigenen Energiespeicher 64, beispielsweise einer Batterie, gekoppelt ist, welche dafür sorgt, daß selbst bei Abschalten der gesamten Stromversorgung für die Maschinensteuerung 60 der Steuerungsteil 62 weiter in der Lage ist, die Abkühlung der Maschinenelemente 18, 38, 34 zu bestimmen und somit den entsprechenden thermischen Zustandswert $Z'_{18}$, $Z'_{38}$ und $Z'_{34}$ nach einem Zeitinkrement $\Delta t$ zu ermitteln.

Damit ist selbst nach längerem Stillsetzen der Werkzeugmaschine die Möglichkeit geschaffen, die thermischen Einflüsse auf die einzelnen Maschinenelemente 18, 38, 34 zu ermitteln und deren Auswirkungen zu berücksichtigen.

Alternativ oder ergänzend zum Ermitteln der thermischen Zustandswerte Z' auch nach Abschalten der Werkzeugmaschine, um die weitere Abkühlung der einzelnen Maschinenelemente 18, 38, 34 zu erfassen, besteht auch die Möglichkeit, einem der Maschinenelemente, beispielsweise dem Spindelkasten 18, einen Temperatursensor 66 zuzuordnen, welcher mit der Maschinensteuerung 60 gekoppelt ist und über welchen die Maschinensteuerung 60 dann beispielsweise nach einem Stillsetzen der Werkzeugmaschine und vor Beginn einer erneuten Bearbeitung eines Werkstücks 12 den thermischen Zustand Z eines Maschinenelements, nämlich des Spindelkastens 18, erfassen kann und beispielsweise über einen Parameterzusammenhang dann auch auf den thermischen Zustand Z der übrigen Maschinenelemente, also beispielsweise des Linearantriebs 38 und des Werkzeugrevolvers 34 schließen kann, um einen aktuellen thermischen Zustandswert Z' zur Verfügung zu haben, mit welchem dann wiederum die zyklische Ermittlung der thermischen Einflüsse erfolgen kann.

Es ist aber auch denkbar, den Temperatursensor 66 dazu einzusetzen, in bestimmten Zeitintervallen den stets in den einzelnen Zyklen errechneten thermischen Zustandswert Z' mit einer real vom Temperatursensor 66 gemessenen Temperatur zu vergleichen, um einen sich über viele Zyklen zur Ermittlung des thermischen Zustandswerts Z aufaddierenden Fehler, beispielsweise durch nicht adäquate Wahl der einzelnen experimentell zu bestimmenden Parameter PW und PS, zu korrigieren.

**EP 0 942 342 B1**

**Patentansprüche**

1. Verfahren zum Bearbeiten von Werkstücken mittels einer eine werkstücktragende Baugruppe (10) und eine werkzeugtragende Baugruppe (30) umfassenden Werkzeugmaschine, wobei thermische Einflüsse auf die Reproduktionsgenauigkeit der Werkstücke (12) in mindestens einer ausgewählten Bearbeitungsachse (X) durch Berücksichtigung der Erwärmung **dadurch** reduziert werden, daß mindestens einem Maschinenelement (18, 38, 34) der Werkzeugmaschine mindestens eine Wärmequelle (W) zugeordnet wird, daß ein eine von der Wärmequelle(W) entsprechend dem Betrieb der Werkzeugmaschine abgegebene Wärmeleistung repräsentierender Wärmeleistungswert (WL) erfaßt und darauf basierend ein die thermische Beeinflussung des Maschinenelements (18, 38, 34) repräsentierender thermischer Zustandswert (Z) ermittelt wird und daß aus dem thermischen Zustandswert (Z) für die ausgewählte Bearbeitungsachse (X) ein Wert (ΔI) für einen Fehler in der Reproduktionsgenauigkeit bestimmt wird, **dadurch gekennzeichnet, daß** der Wert (ΔI) für den Fehler zu durch die Bearbeitungen des Werkstücks (12) vorgegebenen Zeitpunkten in den Ansteuerdaten für die weitere Bearbeitung eines der Werkstücke (12) berücksichtigt wird.

2. Verfahren nach Anspruch 1, **dadurch gekennzeichnet, daß** zur Ermittlung des thermischen Zustandswerts des Maschinenelements (18, 38, 34) ein die in diese von der Wärmequelle (W) eingekoppelte Wärmeleistung berücksichtigender Wärmeeintragswert (WE) ermittelt wird.

3. Verfahren nach einem der voranstehenden Ansprüche, **dadurch gekennzeichnet, daß** dem mindestens einen Maschinenelement (18, 38, 34) mindestens eine Wärmesenke (S) zugeordnet wird und deren thermischer Einfluß bei der Ermittlung thermischen Zustandswerts (Z) berücksichtigt wird.

4. Verfahren nach Anspruch 3, **dadurch gekennzeichnet, daß** ein die bei inaktiver Wärmequelle ($W_1$, $W_2$) von der Wärmesenke ($S_2$) aus dem Maschinenelement (18, 38, 34) ausgekoppelte Wärmeleistung berücksichtigender Wärmeaustragswert (WA) ermittelt wird.

5. Verfahren nach Anspruch 3 oder 4, **dadurch gekennzeichnet, daß** die aus dem Maschinenelement (18, 38, 34) ausgekoppelte Wärmeleistung in Abhängigkeit von einzelnen Betriebszuständen der Werkzeugmaschine ermittelt wird.

6. Verfahren nach einem der Ansprüche 4 oder 5, **dadurch gekennzeichnet daß** durch eine Berücksichtigung von Wärmeeintragswert (WE) oder Wärmeaustragswert (WA) der thermische Zustandswert (Z) bestimmt wird.

7. Verfahren noch einem der voranstehenden Ansprüche, **dadurch gekennzeichnet, daß** mindestens einem Maschinenelement (18, 38, 34) der Werkzeugmaschine eine Wärmequelle (W) und eine Wärmesenke (S) zugeordnet werden, daß ein eine bei aktiver Wärmequelle (W) von dieser in das Maschinenelement (18, 38, 34) eingekoppelte Wärmeleistung berücksichtigender Wärmeeintragswert (WE) und ein eine bei inaktiver Wärmequelle von der Wärmesenke (S) aus das Maschinenelement (18, 38, 34) ausgekoppelte Wärmeleistung berücksichtigender Wärmeaustragswert (WA) ermittelt werden, daß durch Erfassung des Wärmeeintragswerts (WE) und des Wärmeaustragswerts (WA) ein die thermische Beeinflussung des Maschinenelements (18, 38, 34) repräsentierender thermischer Zustandswert (Z) ermittelt wird und daß aus dem thermischen Zustandswert (Z) für die ausgewählte Bearbeitungsachse (X) der Wert (ΔI) für den Fehler in der Reproduktionsgenauigkeit bei der Bearbeitung eines der Werkstücke (12) bestimmt wird.

8. Verfahren nach einem der Ansprüche 2 bis 7, **dadurch gekennzeichnet, daß** in dem Wärmeeintragswert (WE) die von der Wärmesenke (S) ausgekoppelte Wärmeleistung berücksichtigt wird.

9. Verfahren nach einem der Ansprüche 2 bis 8, **dadurch gekennzeichnet, daß** ein eine von der aktiven Wärmequelle (W) abgegebene Wärmeleistung repräsentierender Wärmeleistungswert (WL) erfaßt und zur Ermittlung des Wärmeeintragswerts (WE) herangezogen wird.

10. Verfahren nach einem der voranstehenden Ansprüche, **dadurch gekennzeichnet, daß** der Wärmequelle (W) ein Antriebsaggregat (22, 44) der Werkzeugmaschine zugeordnet wird und daß der Wärmeleistungswert (WL) auf der Basis der von dem Antriebsaggregat (22, 44) aufgenommenen Leistung ermittelt wird.

11. Verfahren nach Anspruch 10, **dadurch gekennzeichnet, daß** die von dem Antriebsaggregat (22, 44) aufgenommene Leistung aus Ansteuerparametern für dieses ermittelt wird.

**12.** Verfahren nach Anspruch 10 oder 11, **dadurch gekennzeichnet, daß** die von dem Antriebsaggregat (22, 44) tatsächlich aufgenommene Leistung ermittelt wird.

**13.** Verfahren nach einem der Ansprüche 4 bis 12, **dadurch gekennzeichnet, daß** fortlaufend der Wärmeeintragswert (WE) und/oder der Wärmeaustragswert (WA) erfaßt werden.

**14.** Verfahren nach Anspruch 13, **dadurch gekennzeichnet, daß** der Wärmeeintragswert (WE) und/oder der Wärmeaustragswert (WA) zu festgelegten Zeitpunkten erfaßt werden.

**15.** Verfahren nach Anspruch 14, **dadurch gekennzeichnet, daß** der Wärmeeintragswert (WE) und/oder der Wärmeaustragswert (WA) in einem festgelegten Takt erfaßt werden.

**16.** Verfahren nach einem der Ansprüche 6 bis 15, **dadurch gekennzeichnet, daß** der thermische Zustandswert (Z) durch fortlaufende Berücksichtigung von Wärmeeintragswert (WE) und Wärmeaustragswert (WA) ermittelt wird.

**17.** Verfahren nach einem der Ansprüche 6 bis 16, **dadurch gekennzeichnet, daß** bei der Ermittlung des aktuellen thermischen Zustandswerts (Z') der bereits vorliegende thermische Zustandswert (Z) sowie der aktuelle Wärmeeintragswert (WE) oder der aktuelle Wärmeaustragswert (WA) berücksichtigt werden.

**18.** Verfahren nach Anspruch 17, **dadurch gekennzeichnet, daß** die Berücksichtigung durch Summation des vorliegenden thermischen Zustandswerts (Z) sowie des Wärmeeintragswerts (WE) oder des Wärmeaustragswerts (WA) erfolgt.

**19.** Verfahren nach einem der Ansprüche 16 bis 18, **dadurch gekennzeichnet, daß** die Ermittlung des thermischen Zustandswerts (Z) unter Berücksichtigung von Wärmeeintragswert (WE) oder Wärmeaustragswert (WA) zu vorgegebenen Zeitpunkten erfolgt.

**20.** Verfahren nach Anspruch 18 oder 19, **dadurch gekennzeichnet, daß** der ermittelte thermische Zustandswert (Z) bis zur nächsten Ermittlung gespeichert wird.

**21.** Verfahren nach einem der Ansprüche 16 bis 20, **dadurch gekennzeichnet, daß** der thermische Zustandswert (Z') während des gesamten Betriebs der Werkzeugmaschine und auch danach ermittelt wird.

**22.** Verfahren nach einem der voranstehenden Ansprüche, **dadurch gekennzeichnet, daß** mehrere das Maschinenelement (18, 38, 34) beeinflussende Wärmequellen (W) erfaßt werden.

**23.** Verfahren nach Anspruch 22, **dadurch gekennzeichnet, daß** die mehreren Wärmequellen (W) einzeln durch diesen entsprechende Wärmeeintragswerte (WE) erfaßt werden.

**24.** Verfahren nach einem der Ansprüche 3 bis 23, **dadurch gekennzeichnet, daß** mehrere das Maschinenelement (18, 38, 34) beeinflussende Wärmesenken (S) erfaßt werden.

**25.** Verfahren nach Anspruch 24, **dadurch gekennzeichnet, daß** die mehreren Wärmesenken (S) einzeln durch diesen entsprechende Wärmeaustragswerte (WA) erfaßt werden.

**26.** Verfahren nach einem der voranstehenden Ansprüche, **dadurch gekennzeichnet, daß** der Wert ($\Delta$l) für den Fehler zu ausgewählten Zeitpunkten in den Ansteuerdaten für die Bearbeitung des Werkstücks (12) berücksichtigt wird.

**27.** Verfahren nach einem der voranstehenden Ansprüche, **dadurch gekennzeichnet, daß** die Berücksichtigung des Wertes ($\Delta$l) für den Fehler zwischen einzelnen Bearbeitungsschritten erfolgt.

**28.** Verfahren nach Anspruch 27, **dadurch gekennzeichnet, daß** die Berücksichtigung des Wertes ($\Delta$l) für den Fehler jeweils nach zusammenhängenden Bearbeitungsschritten erfolgt.

**29.** Werkzeugmaschine nach Anspruch 28, **dadurch gekennzeichnet, daß** die Berücksichtigung des Wertes ($\Delta$l) für den Fehler jeweils nach Bearbeitung eines Werkstücks (12) erfolgt.

**30.** Werkzeugmaschine zum Bearbeiten von Werkstücken, umfassend eine werkstücktragende Baugruppe (14), eine werkzeugtragende Baugruppe (30) und eine Maschinensteuerung (60), welche thermische Einflüsse auf die Reproduktionsgenauigkeit der Werkstücke in mindestens einer ausgewählten Bearbeitungsachse durch Berücksichtigung der Erwärmung **dadurch** reduziert, daß die Maschinensteuerung (60) mindestens einem Maschinenelement (18, 38, 24) der Werkzeugmaschine mindestens eine Wärmequelle (W) zuordnet, daß die Maschinensteuerung (60) einen eine von der Wärmequelle (W) entsprechend dem Betrieb der Werkzeugmaschine abgegebene Wärmeleistung repräsentierenden Wärmeleistungswert (WL) erfaßt und darauf basierend einen die thermische Beeinflussung des Maschinenelements (18, 38, 34) repräsentierenden thermischen Zustandswert (Z) ermittelt und daß die Maschinensteuerung (60) aus dem thermischen Zustandswert (Z) für die ausgewählte Bearbeitungsachse (X) einen Wert (ΔI) für einen Fehler in der Reproduktionsgenauigkeit bestimmt, **dadurch gekennzeichnet, daß** die Maschinensteuerung (60) den Wert (ΔI) für den Fehler zu durch die Bearbeitungen des Werkstücks (12) vorgegebenen Zeitpunkten in den Ansteuerdaten für die weitere Bearbeitung eines der Werkstücke (12) berücksichtigt.

31. Werkzeugmaschine nach Anspruch 30, **dadurch gekennzeichnet, daß** die Maschinensteuerung (60) zur Ermittlung des thermischen Zustandswerts (Z) des Maschinenelements (18, 38, 34) einen die in diese von der Wärmequelle (W) eingekoppelte Wärmeleistung berücksichtigenden Wärmeeintragswert (WE) ermittelt.

32. Werkzeugmaschine nach einem der Ansprüche 30 oder 31, **dadurch gekennzeichnet, daß** die Maschinensteuerung (60) dem mindestens einen Maschinenelement (18, 38, 34) mindestens eine Wärmesenke (S) zuordnet und deren thermischer Einfluß bei der Ermittlung thermischen Zustandswerts (Z) berücksichtigt.

33. Werkzeugmaschine nach Anspruch 32, **dadurch gekennzeichnet, daß** die Maschinensteuerung (60) einen die bei inaktiver Wärmequelle (W) von der Wärmesenke (S) aus dem Maschinenelement (18, 38, 34) ausgekoppelte Wärmeleistung berücksichtigenden Wärmeaustragswert (WA) ermittelt.

34. Werkzeugmaschine nach Anspruch 32 oder 33, **dadurch gekennzeichnet, daß** die Maschinensteuerung (60) die aus dem Maschinenelement (18, 38, 34) ausgekoppelte Wärmeleistung in Abhängigkeit von einzelnen Betriebszuständen der Werkzeugmaschine ermittelt.

35. Werkzeugmaschine nach einem der Ansprüche 33 oder 34, **dadurch gekennzeichnet daß** die Maschinensteuerung (60) durch eine Berücksichtigung von Wärmeeintragswert (WE) und Wärmeaustragswert (WA) den thermischen Zustandswert (Z) bestimmt.

36. Werkzeugmaschine nach einem der Ansprüche 33 bis 35, **dadurch gekennzeichnet, daß** die Maschinensteuerung (60) mindestens einem Maschinenelement (18, 38, 34) der Werkzeugmaschine eine Wärmequelle (W) und eine Wärmesenke (S) zuordnet, daß die Maschinensteuerung (60) einen eine von der aktiven Wärmequelle (W) in das Maschinenelement (18, 38, 34) eingekoppelte Wärmeleistung berücksichtigenden Wärmeeintragswert (WE) und ein eine bei inaktiver Wärmequelle (W) von der Wärmesenke (S) aus dem Maschinenelement (18, 38, 34) ausgekoppelte Wärmeleistung berücksichtigenden Wärmeaustragswert (WA) ermittelt, daß die Maschinensteuerung (60) durch Erfassung des Wärmeeintragswerts (WE) und des Wärmeaustragswerts (WA) einen die thermische Beeinflussung des Maschinenelements repräsentierenden thermischen Zustandswert (Z) ermittelt und daß die Maschinensteuerung (60) aus dem thermischen Zustandswert (Z) für die ausgewählte Bearbeitungsachse (X) einen Wert (ΔI) für den Fehler in der Reproduktionsgenauigkeit bei der Bearbeitung eines der Werkstücke (12) bestimmt.

37. Werkzeugmaschine nach einem der Ansprüche 31 bis 36, **dadurch gekennzeichnet, daß** in dem Wärmeeintragswert (WE) die von der Wärmesenke (S) ausgekoppelte Wärmeleistung berücksichtigt ist.

38. Werkzeugmaschine nach einem der Ansprüche 31 bis 37, **dadurch gekennzeichnet, daß** die Maschinensteuerung (60) einen eine von der Wärmequelle (W) abgegebene Wärmeleistung repräsentierenden Wärmeleistungswert (WL) erfaßt und zur Ermittlung des Wärmeeintragswerts (WE) heranzieht.

39. Werkzeugmaschine nach einem der voranstehenden Ansprüche 30 bis 38, **dadurch gekennzeichnet, daß** die Maschinensteuerung (60) der Wärmequelle (W) ein Antriebsaggregat (22, 44) der Werkzeugmaschine zuordnet und den Wärmeleistungswert (WL) auf der Basis der von dem Antriebsaggregat (22, 44) aufgenommenen Leistung ermittelt.

40. Werkzeugmaschine nach Anspruch 39, **dadurch gekennzeichnet, daß** die Maschinensteuerung (60) die von dem Antriebsaggregat ( 22,44) aufgenomme Leistung aus Ansteuerparametern für diese ermittelt.

**41.** Werkzeugmaschine nach Anspruch 39 oder 40, **dadurch gekennzeichnet, daß** die Maschinensteuerung (60) die von dem Antriebsaggregat (22, 44) tatsächlich aufgenommene Leistung ermittelt.

**42.** Werkzeugmaschine nach einem der Ansprüche 33 bis 41, **dadurch gekennzeichnet, daß** die Maschinensteuerung (60) fortlaufend den Wärmeeintragswert (WE) und/oder den Wärmeaustragswert (WA) erfaßt.

**43.** Werkzeugmaschine nach Anspruch 42, **dadurch gekennzeichnet, daß** die Maschinensteuerung (60) den Wärmeeintragswert (WE) und/oder den Wärmeaustragswert (WA) zu festgelegten Zeitpunkten erfaßt.

**44.** Werkzeugmaschine nach Anspruch 43, **dadurch gekennzeichnet, daß** die Maschinensteuerung (60) den Wärmeeintragswert (WE) und/oder den Wärmeaustragswert (WA) in einem festgelegten Takt erfaßt.

**45.** Werkzeugmaschine nach einem der Ansprüche 35 bis 44, **dadurch gekennzeichnet, daß** die Maschinensteuerung (60) den thermischen Zustandswert (Z) durch fortlaufende Berücksichtigung von Wärmeeintragswert (WE) und Wärmeaustragswert (WA) ermittelt.

**46.** Werkzeugmaschine nach einem der Ansprüche 35 bis 45, **dadurch gekennzeichnet, daß** die Maschinensteuerung (60) bei der Ermittlung des aktuellen thermischen Zustandswerts (Z') den bereits vorliegende thermischen Zustandswert (Z) sowie den aktuellen Wärmeeintragswert (WE) oder den aktuellen Wärmeaustragswert (WA) berücksichtigt.

**47.** Werkzeugmaschine nach Anspruch 46, **dadurch gekennzeichnet, daß** die Berücksichtigung durch Summation des vorliegenden thermischen Zustandswert (Z) und des Wärmeeintragswerts (WE) oder des Wärmeaustragswerts (WA) erfolgt.

**48.** Werkzeugmaschine nach einem der Ansprüche 45 bis 47, **dadurch gekennzeichnet, daß** die Ermittlung des thermischen Zustandswerts (Z') unter Berücksichtigung von Wärmeeintragswert (WE) oder Wärmeaustragswert (WA) zu vorgegebenen Zeitpunkten erfolgt.

**49.** Werkzeugmaschine nach einem der Ansprüche 44 bis 48, **dadurch gekennzeichnet, daß** die Maschinensteuerung (60) den ermittelten thermischen Zustandswert (Z') bis zur nächsten Ermittlung speichert.

**50.** Werkzeugmaschine nach einem der Ansprüche 45 bis 49, **dadurch gekennzeichnet, daß** die Maschinensteuerung (60) den thermischen Zustandswert (Z) während des gesamten Betriebs der Werkzeugmaschine und auch danach ermittelt.

**51.** Werkzeugmaschine nach Anspruch 50, **dadurch gekennzeichnet, daß** die Maschinensteuerung (60) eine Steuerungseinheit (62) umfaßt, welche den thermischen Zustandswert (Z) über den Betrieb der Werkzeugmaschine hinaus unterstützt durch einen Energiespeicher (64) ermittelt.

**52.** Werkzeugmaschine nach einem der Ansprüche 30 bis 51, **dadurch gekennzeichnet, daß** die Maschinensteuerung (60) mehrere das Maschinenelement (18, 38, 34) beeinflussende Wärmequellen (W) erfaßt.

**53.** Werkzeugmaschine nach Anspruch 52, **dadurch gekennzeichnet, daß** die Maschinensteuerung (60) die mehreren Wärmequellen (W) einzeln durch diesen entsprechende Wärmeeintragswerte (WE) erfaßt.

**54.** Werkzeugmaschine nach einem der Ansprüche 32 bis 53, **dadurch gekennzeichnet, daß** die Maschinensteuerung (60) mehrere das Maschinenelement (18, 38, 34) beeinflussende Wärmesenken (S) erfaßt.

**55.** Werkzeugmaschine nach Anspruch 54, **dadurch gekennzeichnet, daß** die Maschinensteuerung (60) die mehreren Wärmesenken (S) einzeln durch diesen entsprechende Wärmeaustragswerte (WA) erfaßt.

**56.** Werkzeugmaschine nach einem der Ansprüche 30 bis 55, **dadurch gekennzeichnet, daß** die Maschinensteuerung (60) den Wert ($\Delta$I) für den Fehler zu ausgewählten Zeitpunkten in den Ansteuerdaten für die Bearbeitung berücksichtigt.

**57.** Werkzeugmaschine nach einem der voranstehenden Ansprüche, **dadurch gekennzeichnet, daß** die Berücksichtigung des Wertes ($\Delta$I) für den Fehler zwischen einzelnen Bearbeitungsschritten erfolgt.

**58.** Werkzeugmaschine nach Anspruch 57, **dadurch gekennzeichnet, daß** die Berücksichtigung des Wertes ($\Delta$l) für den Fehler jeweils nach zusammenhängenden Bearbeitungsschritten erfolgt.

**59.** Werkzeugmaschine nach Anspruch 58, **dadurch gekennzeichnet, daß** die Berücksichtigung des Wertes ($\Delta$l) für den Fehler jeweils nach Bearbeitung eines Werkstücks (12) erfolgt.

**Claims**

**1.** Method for machining workpieces by means of a machine tool comprising a workpiece-carrying assembly and a tool-carrying assembly (30), wherein thermal influences on the reproduction accuracy of the workpieces (12) in at least one selected machining axis (X) are reduced by taking into account the heating, in that at least one heat source (W) is associated with at least one machine element (18, 38, 34) of the machine tool, in that a heat emission value (WL) representing a heat emission emitted from the heat source (W) corresponding to the operation of the machine tool and, based thereon, a thermal state value (Z) representing the thermal influencing of the machine element (18, 38, 34) is determined and in that a value ($\Delta$l) for an error in the reproduction accuracy is determined from the thermal state value (Z) for the selected machining axis (X), **characterised in that** the value ($\Delta$l) for the error is taken into account at instants predetermined by the machining of the workpiece (12) in the control data for further machining of one of the workpieces (12).

**2.** Method according to claim 1, **characterised in that** to determine the thermal state value (2) of the machine element (18, 38, 34), a heat input value (WE) that takes into account the heat emission introduced therein from the heat source (W) is determined.

**3.** Method according to any one of the preceding claims, **characterised in that** at least one heat sink (S) is associated with the at least one machine element (18, 38, 34) and the thermal influence thereof is taken into account when determining the thermal state value (Z).

**4.** Method according to claim 3, **characterised in that** a heat output value (WA) taking into account the heat emission that is output in the case of an inactive heat source ($W_1$, $W_2$) by the heat sink ($S_2$) from the machine element (18, 38, 34) is determined.

**5.** Method according to claim 3 or 4, **characterised in that** the heat emission that is output from the machine element (18, 38, 34) is determined as a function of individual operating states of the machine tool.

**6.** Method according to any one of claims 4 or 5, **characterised in that** the thermal state value (Z) is determined by taking into account the heat input value (WE) or heat output value (WA).

**7.** Method according to any one of the preceding claims, **characterised in that** a heat source (W) and a heat sink (S) are associated with at least one machine element (18, 38, 34) of the machine tool, **in that** a heat input value (WE) taking into account a heat emission input into the machine element (18, 38, 34) when the heat source (W) is active by the latter and a heat output value (WA) taking into account a heat emission that is output by the heat sink (S) from the machine element (18, 38, 34) when the heat source is inactive are determined, **in that** a thermal state value (Z) representing the thermal influencing of the machine element (18, 38, 34) is determined by detecting the heat input value (WE) and the heat output value (WA) and **in that** the value ($\Delta$l) for the error in the reproduction accuracy during the machining of one of the workpieces (12) is determined from the thermal state value (Z) for the selected machining axis (X).

**8.** Method according to any one of claims 2 to 7, **characterised in that** the heat emission that is output by the heat sink (S) is taken into account in the heat input value (WE).

**9.** Method according to any one of claims 2 to 8, **characterised in that** a heat emission value (WL) representing a heat emission emitted by the active heat source (W) is detected and used to determine the heat input value (WE).

**10.** Method according to any one of the preceding claims, **characterised in that** a drive unit (22, 44) of the machine tool is associated with the heat source (W) and **in that** the heat emission value (WL) is determined on the basis of the power received by the drive unit (22, 44).

11. Method according to claim 10, **characterised in that** the power received by the drive unit (22, 44) is determined from control parameters for the latter.

12. Method according to claim 10 or 11, **characterised in that** the power actually received by the drive unit (22, 44) is determined.

13. Method according to any one of claims 4 to 12, **characterised in that** the heat input value (WE) and/or heat output value (WA) are detected continuously.

14. Method according to claim 13, **characterised in that** the heat input value (WE) and/or the heat output value (WA) are detected at fixed instants.

15. Method according to claim 14, **characterised in that** the heat input value (WE) and the heat output value (WA) are detected in a fixed cycle.

16. Method according to any one of claims 6 to 15, **characterised in that** the thermal state value (Z) is determined by continuous consideration of the heat input value (WE) and heat output value (WA).

17. Method according to any one of claims 6 to 16, **characterised in that** when determining the current thermal state value (Z'), the already present thermal state value (Z) and the current heat input value (WE) or the current heat output value (WA) are taken into account.

18. Method according to claim 17, **characterised in that** the taking into account takes place by summation of the present thermal state value (Z) and of the heat input value (WE) or of the heat output value (WA).

19. Method according to any one of claims 16 to 18, **characterised in that** the state value (Z) is determined taking into account the heat input value (WE) or heat output value (WA) at predetermined instants.

20. Method according to claim 18 or 19, **characterised in that** the determined thermal state value (Z) is stored until the next determination.

21. Method according to any one of claims 16 to 20, **characterised in that** the thermal state value (Z') is determined during the entire operation of the machine tool and also thereafter.

22. Method according to any one of the preceding claims, **characterised in that** a plurality of heat sources (W) influencing the machine element (18, 38, 34) are detected.

23. Method according to claim 22, **characterised in that** the plurality of heat sources (W) are detected individually by heat input values (WE) corresponding thereto.

24. Method according to any one of claims 3 to 23, **characterised in that** a plurality of heat sinks (S) influencing the machine element (18, 38, 34) are detected.

25. Method according to claim 24, **characterised in that** the plurality of heat sinks (S) are detected individually by heat output values (WA) corresponding thereto.

26. Method according to any one of the preceding claims, **characterised in that** the value (ΔI) for the error is taken into account in the control data for machining the workpiece (12) at selected instants.

27. Method according to any one of the preceding claims, **characterised in that** the value (ΔI) for the error is taken into account between individual machining steps.

28. Method according to claim 27, **characterised in that** the value (ΔI) for the error is taken into account, in each case, after connected machining steps.

29. Method according to claim 28, **characterised in that** the value (ΔI) for the error is taken into account, in each case, after machining of a workpiece (12).

30. Machine tool for machining workpieces, comprising a workpiece-carrying assembly (14), a tool-carrying assembly (30) and a machine controller (60), which reduces thermal influences on the reproduction accuracy of the workpieces in at least one selected machining axis by taking into account the heating in that the machine controller (60) associates at least one heat source (W) with at least one machine element (18, 38, 24) of the machine tool, in that the machine controller (60) detects a heat emission value (WL) representing a heat emission emitted from the heat source (W) according to the operation of the machine tool and, based thereon, determines a thermal state value (Z) representing the thermal influencing of the machine element (18, 38, 34) and in that the machine controller (60) determines a value (∆l) for an error in the reproduction accuracy from the thermal state value (Z) for the selected machining axis (X), **characterised in that** the machine controller (60) takes into account the value (∆l) for the error at predetermined instants predetermined by the machinings of the workpiece (12) in the control data for the further machining of one of the workpieces (12).

31. Machine tool according to claim 30; **characterised in that** the machine controller (60) for determining the thermal state value (Z) of the machine element (18, 38, 34) determines a heat input value (WE) taking into account the heat emission input therein from the heat source (W).

32. Machine tool according to either of claims 30 or 31, **characterised in that** the machine controller (60) associates at least one heat sink (S) with the at least one machine element (18, 38, 34) and takes into account the thermal influence thereof in determining the thermal state value (Z).

33. Machine tool according to claim 32, **characterised in that** the machine controller (60) determines a heat output value (WA) taking into account the heat emission output by the heat sink (S) from the machine element (18, 38, 34) when the heat source (W) is inactive.

34. Machine tool according to claim 32 or 33, **characterised in that** the machine controller (60) determines the heat emission that is output from the machine element (18, 38, 34) as a function of individual operating states of the machine tool.

35. Machine tool according to either of claims 33 or 34, **characterised in that** the machine controller (60) determines the thermal state value (Z) by taking into account the heat input value (WE) and heat output value (WA).

36. Machine tool according to any one of claims 33 to 35, **characterised in that** the machine controller (60) associates a heat source (W) and a heat sink (S) with at least one machine element (18, 38, 34) of the machine tool, **in that** the machine controller (60) determines a heat input value (WE) taking into account a heat emission input into the machine element (18, 38, 34) by the active heat source (W) and a heat output value (WA) taking into account a heat emission output from the machine element (18, 38, 34) by the heat sink (S) when the heat source (W) is inactive, **in that** the machine controller (60) determines a thermal state value (Z) representing the thermal influencing of the machine element by detecting the heat input value (WE) and the heat output value (WA) and **in that** the machine controller (60) determines a value (∆l) for the error in the reproduction accuracy during the machining of one of the workpieces (12) from the thermal state value (Z) for the selected machining axis (X).

37. Machine tool according to any one of claims 31 to 36, **characterised in that** the heat emission output by the heat sink (S) is taken into account in the heat input value (WE).

38. Machine tool according to any one of claims 31 to 37, **characterised in that** the machine controller (60) detects a heat emission value (WL) representing a heat emission emitted by the heat source (W) and uses it to determine the heat input value (WE).

39. Machine tool according to any one of the preceding claims 30 to 38, **characterised in that** the machine controller (60) associates a drive unit (22, 44) of the machine tool with the heat source (W) and determines the heat emission value (WL) on the basis of the power received by the drive unit (22, 44).

40. Machine tool according to claim 39, **characterised in that** the machine controller (60) determines the power received by the drive unit (22, 44) from control parameters for the latter.

41. Machine tool according to claim 39 or 40, **characterised in that** the machine controller (60) determines the power actually received by the drive unit (22, 44).

42. Machine tool according to any one of claims 33 to 41, **characterised in that** the machine controller (60) continuously detects the heat input value (WE) and/or the heat output value (WA).

43. Machine tool according to claim 42, **characterised in that** the machine controller (60) detects the heat input value (WE) and/or the heat output value (WA) at fixed instants.

44. Machine tool according to claim 43, **characterised in that** the machine controller (60) detects the heat input value (WE) and/or the heat output value (WA) in a fixed cycle.

45. Machine tool according to any one of claims 35 to 44, **characterised in that** the machine controller (60) determines the thermal state value (Z) by continuously taking into account the heat input value (WE) and heat output value (WA).

46. Machine tool according to any one of claims 35 to 45, **characterised in that** the machine controller (60) takes into account the already present thermal state value (Z) and the current heat input value (WE) or the current heat output value (WA) when determining the current thermal state value (Z').

47. Machine tool according to claim 46, **characterised in that** the taking into account takes place by summation of the present thermal state value (Z) and of the thermal input value (WE) or the thermal output value (WA).

48. Machine tool according to any one of claims 45 to 47, **characterised in that** the thermal state value (Z') is determined taking into account the heat input value (WE) or heat output value (WA) at predetermined instants.

49. Machine tool according to any one of claims 44 to 48, **characterised in that** the machine controller (60) stores the determined thermal state value (Z') until the next determination.

50. Machine tool according to any one of claims 45 to 49, **characterised in that** the machine controller (60) determines the thermal state value (Z) during the entire operation of the machine tool and also thereafter.

51. Machine tool according to claim 50, **characterised in that** the machine controller (60) comprises a control unit (62), which determines the thermal state value (Z) beyond the operation of the machine tool assisted by an energy store (64).

52. Machine tool according to any one of claims 30 to 51, **characterised in that** the machine controller (60) detects a plurality of heat sources (W) influencing the machine element (18, 38, 34).

53. Machine tool according to claim 52, **characterised in that** the machine controller (60) detects the plurality of heat sources (W) individually by heat input values (WE) corresponding thereto.

54. Machine tool according to any one of claims 32 to 53, **characterised in that** the machine controller (60) detects a plurality of heat sinks (S) influencing the machine element (18, 38, 34).

55. Machine tool according to claim 54, **characterised in that** the machine controller (60) detects the plurality of heat sinks (S) individually by heat output values (WA) corresponding thereto.

56. Machine tool according to any one of claims 30 to 55, **characterised in that** the machine controller (60) takes into account the value (ΔI) for the error at selected instants in the control data for the machining.

57. Machine tool according to any one of the preceding claims, **characterised in that** the value (ΔI) for the error is taken into account between individual machining steps.

58. Machine tool according to claim 57, **characterised in that** the value (ΔI) for the error is taken into account, in each case, after connected machining steps.

59. Machine tool according to claim 58, **characterised in that** the value (ΔI) for the error is taken into account, in each case, after machining a workpiece (12).

**Revendications**

1. Procédé d'usinage de pièces au moyen d'une machine-outil comprenant un sous-groupe support de pièces (14) et un sous-groupe porte-outils (30), procédé selon lequel les influences thermiques sur la précision de reproduction des pièces (12) sont réduites par la prise en compte du réchauffement dans au moins un axe d'usinage sélectionné (X) en ce qu'au moins une source de chaleur (w) est associée à au moins un organe de machine (18, 38, 34) de la machine-outil, qu'une valeur de puissance calorifique (WL) représentant une puissance calorifique dégagée par la source de chaleur (W) correspondant au fonctionnement de la machine-outil est détectée et sur la base de celle-ci une valeur d'état thermique (Z) représentant l'influence thermique de l'organe de machine (18, 38, 34) est déterminée et en ce qu'une valeur ($\Delta$l) pour un défaut dans la précision de reproduction est déterminée pour l'axe d'usinage (X) sélectionné à partir de la valeur d'état thermique (Z), **caractérisé en ce que** la valeur ($\Delta$l) pour le défaut est prise en compte à des moments prescrits par les usinages de la pièce (12) dans les données de commande pour la poursuite de l'usinage de l'une des pièces (12).

2. Procédé selon la revendication 1, **caractérisé en ce qu'**une valeur d'entrée de chaleur (WE) prenant en compte la puissance calorifique injectée dans l'organe de machine (18, 38, 34) par la source de chaleur (W) est déterminée pour la détermination de la valeur d'état thermique (Z) de l'organe de machine (18, 38, 34).

3. Procédé selon l'une quelconque des revendications précédentes, **caractérisé en ce qu'**au moins un dissipateur thermique (S) est associé à au moins un organe de machine (18, 38, 34) et **en ce qu'**il est tenu compte de son influence thermique lors de la détermination de la valeur d'état thermique (Z).

4. Procédé selon la revendication 3, **caractérisé en ce qu'**une valeur d'évacuation de chaleur (WA) prenant en compte la puissance calorifique extraite de l'organe de machine (18, 38, 34) par le dissipateur thermique ($S_2$) lorsque la source de chaleur est inactive (W1, W2) est déterminée.

5. Procédé selon la revendication 3 ou 4, **caractérisé en ce que** la puissance calorifique extraite de l'organe de machine (18, 38, 34) est déterminée en fonction de différents états de fonctionnement de la machine-outil.

6. Procédé selon l'une quelconque des revendications 4 ou 5, **caractérisé en ce que** la valeur d'état thermique (Z) est déterminée par une prise en compte de la valeur d'entrée de chaleur (WE) ou la valeur d'évacuation de chaleur (WA).

7. Procédé selon l'une quelconque des revendications précédentes, **caractérisé en ce qu'**une source de chaleur (w) et un dissipateur thermique (S) sont associés à au moins un organe de machine (18, 38, 34) de la machine-outil, **en ce qu'**une valeur d'entrée de chaleur (WE) prenant en compte une puissance calorifique injectée par celle-ci dans l'organe de machine (18, 38, 34) lorsque la source de chaleur (W) est active et une valeur d'évacuation de chaleur (WA) prenant en compte de la puissance calorifique extraite de l'organe de machine (18, 38, 34) par le dissipateur thermique (S) sont déterminées lorsque la source de chaleur (W) est inactive, sont déterminées **en ce qu'**une valeur d'état thermique (Z) représentant l'influence thermique de l'organe de machine (18, 38, 34) est déterminée par la détection de la valeur d'entrée de chaleur (WE) et de la valeur d'évacuation de chaleur (WA) et **en ce que** la valeur ($\Delta$l) pour le défaut dans la précision de reproduction lors de l'usinage de l'une des pièces (12) est déterminée à partir de la valeur d'état thermique (Z) pour l'axe d'usinage sélectionné (X).

8. Procédé selon l'une quelconque des revendications 2 à 7, **caractérisé en ce qu'**il est tenu compte de la puissance calorifique extraite du dissipateur thermique (S) dans la valeur d'entrée de chaleur (WE).

9. Procédé selon l'une quelconque des revendications 2 à 8, **caractérisé en ce qu'**une valeur de puissance calorifique (WL) représentant une puissance calorifique dégagée par la source de chaleur active (W) est déterminée et elle est utilisée pour la détermination de la valeur d'entrée de chaleur (WE).

10. Procédé selon l'une quelconque des revendications précédentes, **caractérisé en ce qu'**un ensemble moteur (22, 44) de la machine-outil est associé à la source de chaleur (W) et **en ce que** la valeur de puissance calorifique (WL) est déterminée sur la base de la puissance absorbée par l'ensemble moteur (22, 44).

11. Procédé selon la revendication 10, **caractérisé en ce que** la puissance absorbée par l'ensemble moteur (22, 44) est déterminée à partir des paramètres de commande de celui-ci.

**12.** Procédé selon la revendication 10 ou 11, **caractérisé en ce que** la puissance effectivement absorbée par l'ensemble moteur (22, 44) est déterminée.

**13.** Procédé selon l'une quelconque des revendications 4 à 12, **caractérisé en ce que** la valeur d'entrée de chaleur (WE) et/ou la valeur d'évacuation de chaleur (WA) est détectée de façon continue.

**14.** Procédé selon la revendication 13, **caractérisé en ce que** la valeur d'entrée de chaleur (WE) et/ou la valeur d'évacuation de chaleur (WA) est détectée à des moments déterminés.

**15.** Procédé selon la revendication 14, **caractérisé en ce que** la valeur d'entrée de chaleur (WE) et/ou la valeur d'évacuation de chaleur (WA) est détectée à un rythme déterminé.

**16.** Procédé selon l'une quelconque des revendications 6 à 15, **caractérisé en ce que** la valeur d'état thermique (Z) est déterminée par la prise en compte continue de la valeur d'entrée de chaleur (WE) et de la valeur d'évacuation de chaleur (WA) .

**17.** Procédé selon l'une quelconque des revendications 6 à 16, **caractérisé en ce que** sont prises en compte la valeur d'état thermique (Z) déjà présente ainsi que la valeur d'entrée de chaleur actuelle (WE) ou la valeur d'évacuation de chaleur actuelle (WA) lors de la détermination de la valeur d'état thermique actuelle (z') .

**18.** Procédé selon la revendication 17, **caractérisé en ce que** la prise en compte s'effectue par l'addition de la valeur d'état thermique présente (Z) ainsi que de la valeur d'entrée de chaleur (WE) ou de la valeur d'évacuation de chaleur (WA).

**19.** Procédé selon l'une quelconque des revendications 16 à 18, **caractérisé en ce que** la détermination de la valeur d'état thermique (Z) s'effectue par la prise en compte à des moments prescrits de la valeur d'entrée de chaleur (WE) ou de la valeur d'évacuation de chaleur (WA).

**20.** Procédé selon la revendication 18 ou 19, **caractérisé en ce que** la valeur d'état thermique (Z) déterminée est mise en mémoire jusqu'à la prochaine détermination.

**21.** Procédé selon l'une quelconque des revendications 16 à 20, **caractérisé en ce que** la valeur d'état thermique (Z') est déterminée pendant l'ensemble du fonctionnement de la machine-outil et également après.

**22.** Procédé selon l'une quelconque des revendications précédentes, **caractérisé en ce que** plusieurs sources de chaleur (W) influençant l'organe de machine (18, 38, 34) sont détectées.

**23.** Procédé selon la revendication 22, **caractérisé en ce que** les nombreuses sources de chaleur (W) sont détectées séparément par les valeurs d'entrée de chaleur (WE) correspondant à celles-ci.

**24.** Procédé selon l'une quelconque des revendications 3 à 23, **caractérisé en ce que** plusieurs dissipateurs thermiques (S) influençant l'organe de machine (18, 38, 34) sont détectés.

**25.** Procédé selon la revendication 24, **caractérisé en ce que** les nombreux dissipateurs thermiques (S) sont détectés séparément par les valeurs d'évacuation de chaleur (WA) correspondant à ceux-ci.

**26.** Procédé selon l'une quelconque des revendications précédentes, **caractérisé en ce que** la valeur ($\Delta$I) pour le défaut est prise en compte à des moments sélectionnés dans les données de commande pour l'usinage de la pièce (12).

**27.** Procédé selon l'une quelconque des revendications précédentes, **caractérisé en ce que** la prise en compte de la valeur ($\Delta$I) pour le défaut s'effectue entre différentes étapes d'usinage.

**28.** Procédé selon la revendication 27, **caractérisé en ce que** la prise en compte de la valeur ($\Delta$I) pour le défaut s'effectue respectivement après des étapes d'usinage en continu.

**29.** Procédé selon la revendication 28, **caractérisée en ce que** la prise en compte de la valeur ($\Delta$I) pour le défaut s'effectue respectivement après l'usinage d'une pièce (12).

**30.** Machine-outil d'usinage de pièces, comprenant un sous-groupe support de pièces (14), un sous-groupe porte-outils (30) et une commande de machine (60), qui réduit les influences thermiques sur la précision de reproduction des pièces par la prise en compte du réchauffement dans au moins un axe d'usinage sélectionné en ce que la commande de machine (60) associe au moins une source de chaleur (w) à au moins un organe de machine (18, 38, 24) de la machine-outil, en ce que la commande de machine (60) détecte une valeur de puissance calorifique (WL) représentant une puissance calorifique dégagée par la source de chaleur (W) conformément au fonctionnement de la machine-outil et détermine sur la base de celle-ci une valeur d'état thermique (Z) représentant l'influence thermique de l'organe de machine (18, 38, 34) et en ce que la commande de machine (60) détermine une valeur ($\Delta$I) pour un défaut dans la précision de reproduction pour l'axe d'usinage sélectionné (X) à partir de la valeur d'état thermique (Z), **caractérisée en ce que** la commande de machine (60) prend en compte la valeur ($\Delta$I) pour le défaut à des moments prescrits par les usinages de la pièce (12) dans les données de commande pour la poursuite de l'usinage de l'une des pièces (12).

**31.** Machine-outil selon la revendication 30, **caractérisée en ce que** la commande de machine (60) détermine une valeur d'entrée de chaleur (WE) prenant en compte la puissance calorifique injectée dans l'organe de machine (18 38, 34) par la source de chaleur (W) pour détecter la valeur d'état thermique (Z) de l'organe de machine (18, 38, 34).

**32.** Machine-outil selon l'une quelconque des revendications 30 ou 31, **caractérisée en ce que** la commande de machine (60) associe au moins un dissipateur thermique (S) à au moins un organe de machine (18, 38, 34) et prend en compte son influence thermique lors de la détermination de la valeur d'état thermique (Z).

**33.** Machine-outil selon la revendication 32, **caractérisée en ce que** la commande de machine (60) détermine une valeur d'évacuation de chaleur (WA) prenant en compte la puissance calorifique extraite de l'organe de machine (18, 38, 34) par le dissipateur thermique (S) lorsque la source de chaleur (W) est inactive.

**34.** Machine-outil selon la revendication 32 ou 33, **caractérisée en ce que** la commande de machine (60) détermine la puissance calorifique extraite de l'organe de machine (18, 38, 34) en fonction de différents états de fonctionnement de la machine-outil.

**35.** Machine-outil selon l'une quelconque des revendications 33 ou 34, **caractérisée en ce que** la commande de machine (60) détermine la valeur d'état thermique (Z) par une prise en compte de la valeur d'entrée de chaleur (WE) et de la valeur d'évacuation de chaleur (WA).

**36.** Machine-outil selon l'une quelconque des revendications 33 à 35, **caractérisée en ce que** la commande de machine (60) associe une source de chaleur (W) et un dissipateur thermique (S) à au moins un organe de machine (18, 38, 34) de la machine-outil, **en ce que** la commande de machine (60) détermine une valeur d'entrée de chaleur (WE) prenant en compte la puissance calorifique injectée dans l'organe de machine (18, 38, 34) par la source de chaleur active (W) et une valeur d'évacuation de chaleur (WA) prenant en compte une puissance calorifique extraite de l'organe de machine (18, 38, 34) par le dissipateur thermique (S) lorsque la source de chaleur est inactive (W), **en ce que** la commande de machine (60) détermine une valeur d'état thermique (Z) représentant l'influence thermique de l'organe de machine par la détection de la valeur d'entrée de chaleur (WE) et de la valeur d'évacuation de chaleur (WA) et **en ce que** la commande de machine (60) détermine une valeur ($\Delta$I) pour le défaut dans la précision de reproduction lors de l'usinage de l'une des pièces (12) pour l'axe d'usinage sélectionné (X) à partir de la valeur d'état thermique (Z).

**37.** Machine-outil selon l'une quelconque des revendications 31 à 36, **caractérisé en ce que** la puissance calorifique extraite par le dissipateur thermique (S) est prise en compte dans la valeur d'entrée de chaleur (WE).

**38.** Machine-outil selon l'une quelconque des revendications 31 à 37, **caractérisée en ce que** la commande de machine (60) détecte une valeur de puissance calorifique (WL) représentant une puissance calorifique dégagée par la source de chaleur (W) et l'utilise pour la détermination de la valeur d'entrée de chaleur (WE).

**39.** Machine-outil selon l'une quelconque des revendications précédentes 30 à 38, **caractérisée en ce que** la commande de machine (60) associe un ensemble moteur (22, 44) de la machine-outil à la source de chaleur (w) et détermine la valeur de puissance calorifique (WL) sur la base de la puissance absorbée par l'ensemble moteur (22, 44).

**40.** Machine-outil selon la revendication 39, **caractérisée en ce que** la commande de machine (60) détermine la puissance absorbée par l'ensemble moteur (22,44) à partir des paramètres de commande pour celle-ci.

**41.** Machine-outil selon la revendication 39 ou 40, **caractérisée en ce que** la commande de machine (60) détermine la puissance effectivement absorbée par l'ensemble moteur (22, 44).

**42.** Machine-outil selon l'une quelconque des revendications 33 à 41, **caractérisée en ce que** la commande de machine (60) détecte de façon continue la valeur d'entrée de chaleur (WE) et/ou la valeur d'évacuation de chaleur (WA).

**43.** Machine-outil selon la revendication 42, **caractérisée en ce que** la commande de machine (60) détecte la valeur d'entrée de chaleur (WE) et/ou la valeur d'évacuation de chaleur (WA) à des moments déterminés.

**44.** Machine-outil selon la revendication 43, **caractérisée en ce que** la commande de machine (60) détecte la valeur d'entrée de chaleur (WE) et/ou la valeur d'évacuation de chaleur (WA) à une rythme déterminé.

**45.** Machine-outil selon l'une quelconque des revendications 35 à 44, **caractérisée en ce que** la commande de machine (60) détermine la valeur d'état thermique (Z) par la prise en compte continue de la valeur d'entrée de chaleur (WE) et de la valeur d'évacuation de chaleur (WA).

**46.** Machine-outil selon l'une quelconque des revendications 35 à 45, **caractérisée en ce que** la commande de machine (60) prend en compte la valeur d'état thermique (Z) déjà présente ainsi que la valeur d'entrée de chaleur actuelle (WE) ou la valeur d'évacuation de chaleur actuelle (WA) lors de la détermination de la valeur d'état thermique actuelle (Z').

**47.** Machine-outil selon la revendication 46, **caractérisée en ce que** la prise en compte s'effectue par une addition de la valeur d'état thermique (Z) présente et de la valeur d'entrée de chaleur (WE) ou de la valeur d'évacuation de chaleur (WA).

**48.** Machine-outil selon l'une quelconque des revendications 45 à 47, **caractérisée en ce que** la détermination de la valeur d'état thermique (Z) s'effectue par la prise en compte à des moments prescrits de la valeur d'entrée de chaleur (WE) ou de la valeur d'évacuation de chaleur (WA).

**49.** Machine-outil selon l'une quelconque des revendications 44 à 48, **caractérisée en ce que** la commande de machine (60) met en mémoire la valeur d'état thermique déterminée (Z') jusqu'à la prochaine détermination.

**50.** Machine-outil selon l'une quelconque des revendications 45 à 49, **caractérisée en ce que** la commande de machine (60) détermine la valeur d'état thermique (Z) pendant l'ensemble du fonctionnement de la machine-outil et également après.

**51.** Machine-outil selon la revendication 50, **caractérisée en ce que** la commande de machine (60) comprend une unité de commande (62) qui détermine en étant assisté par un accumulateur d'énergie (64) la valeur d'état thermique (Z) à venir du fonctionnement de la machine-outil.

**52.** Machine-outil selon l'une quelconque des revendications 30 à 51, **caractérisée en ce que** la commande de machine (60) détecte plusieurs sources de chaleur (W) influençant l'organe de machine (18, 38, 34).

**53.** Machine-outil selon la revendication 52, **caractérisée en ce que** la commande de machine (60) détecte séparément plusieurs sources de chaleur (W) par les valeurs d'entrée de chaleur (WE) correspondant à celles-ci.

**54.** Machine-outil selon l'une quelconque des revendications 32 à 53, **caractérisée en ce que** la commande de machine (60) détecte plusieurs dissipateurs thermiques (S) influençant l'organe de machine (18, 38, 34).

**55.** Machine-outil selon la revendication 54, **caractérisée en ce que** la commande de machine (60) détecte séparément plusieurs dissipateurs thermiques (S) par les valeurs d'évacuation de chaleur (WA) correspondant à ceux-ci.

**56.** Machine-outil selon l'une quelconque des revendications 30 à 55, **caractérisée en ce que** la commande de machine (60) prend en compte à des moments sélectionnés la valeur (Δl) pour le défaut dans les données de commande pour l'usinage.

**57.** Machine-outil selon l'une quelconque des revendications précédentes, **caractérisée en ce que** la prise en compte de la valeur (Δl) pour le défaut s'effectue entre différentes étapes d'usinage.

**58.** Machine-outil selon la revendication 57, **caractérisée en ce que** la prise en compte de la valeur ($\Delta$l) pour le défaut s'effectue respectivement après des étapes d'usinage en continu.

**59.** Machine-outil selon la revendication 58, **caractérisée en ce que** la prise en compte de la valeur ($\Delta$l) pour le défaut s'effectue respectivement après l'usinage d'une pièce (12).

FIG.1

FIG.2

FIG.3

FIG.4

$W_1$ aktiv ?
$W_2$ aktiv ?

$WL_1$ bestimmen

$WL_2$ bestimmen

— 80

— 82

ja          nein

84

$WE_{1,34} = WL_1 \cdot PW_{1,34}$

$WE_{2,34} = WL_2 \cdot PW_{2,34}$

$PW_{1,34}$
$PW_{2,34}$

$PS_{34,2}$

$WA_{34,2}$

88

86

$Z'_{34} = Z_{34} + WE_{1,34} + WE_{2,34}$

$Z'_{34} = Z_{34} - WA_{34,2}$

90          92

$PL_{34}$

$\Delta l_3 = Z'_{34} \cdot PL_{34}$

$\Delta l_2$

96          94

$\Delta l_1$

A →   $\Delta l = \Delta l_1 + \Delta l_2 + \Delta l_3$